Europäisches Patentamt

European Patent Office

Office européen des brevets

(19)

(11) EP 0 629 070 B1

(12) FASCICULE DE BREVET EUROPEEN

(45) Date de publication et mention
de la délivrance du brevet:
**27.10.1999 Bulletin 1999/43**

(51) Int Cl.⁶: **H04L 29/06**

(21) Numéro de dépôt: **94401174.1**

(22) Date de dépôt: **27.05.1994**

(54) **Transcodage/codage des fanions d'origine sur une liaison numérique HDLC**

Transkodierung/kodierung von Flag-bytes in einer HDLC-Datenverbindung

Transcoding/coding flag bytes in a HDLC data link

(84) Etats contractants désignés:
**AT BE CH DE DK ES GB GR IE IT LI LU MC NL PT SE**

(30) Priorité: **01.06.1993 FR 9306516**

(43) Date de publication de la demande:
**14.12.1994 Bulletin 1994/50**

(73) Titulaire: **TRANSPAC**
**75755 Paris Cédex 15 (FR)**

(72) Inventeurs:
• **Chouteau, Philippe**
**F-35200 Rennes (FR)**
• **Thomas, Jean-Pierre**
**F-35000 Rennes (FR)**
• **Desbois, Christian**
**F-35000 Rennes (FR)**

(74) Mandataire: **Fréchède, Michel et al**
**Cabinet Plasseraud**
**84, rue d'Amsterdam**
**F-75440 Paris Cédex 09 (FR)**

(56) Documents cités:
**EP-A- 0 444 832**      **WO-A-93/11628**
**US-A- 4 974 223**

• **PATENT ABSTRACTS OF JAPAN vol. 3, no. 099 (E-132) 22 Août 1979 & JP-A-54 078 609 (OMRON TATEISI ELECTRONICS CO) 22 Juin 1979**

## Description

La présente invention concerne un procédé et un système de transmission d'informations auxiliaires sur une liaison bidirectionnelle de données numériques HDLC, et leur application au contrôle d'état de la liaison.

Les supports de transmission de données modernes à moyen et haut débit donnent entière satisfaction pour la transmission d'informations de tous types, sous forme de données numériques transmises par paquets de données.

Un protocole de transmission couramment utilisé consiste à transmettre, sur la liaison précitée, les données numériques utiles entre deux fanions ou plus successifs. Ce protocole désigné en langage anglo-saxon par "High Level Data Link Control Procedures" permet d'acheminer les informations sous forme de données numériques, encadrées par des fanions, d'un point local à un point distant, et/ou réciproquement, sur une liaison bidirectionnelle. Un tel protocole a fait l'objet de la norme ISO/TC 97/SC 6 N 2937 publiée par l'International Organization for Standardization.

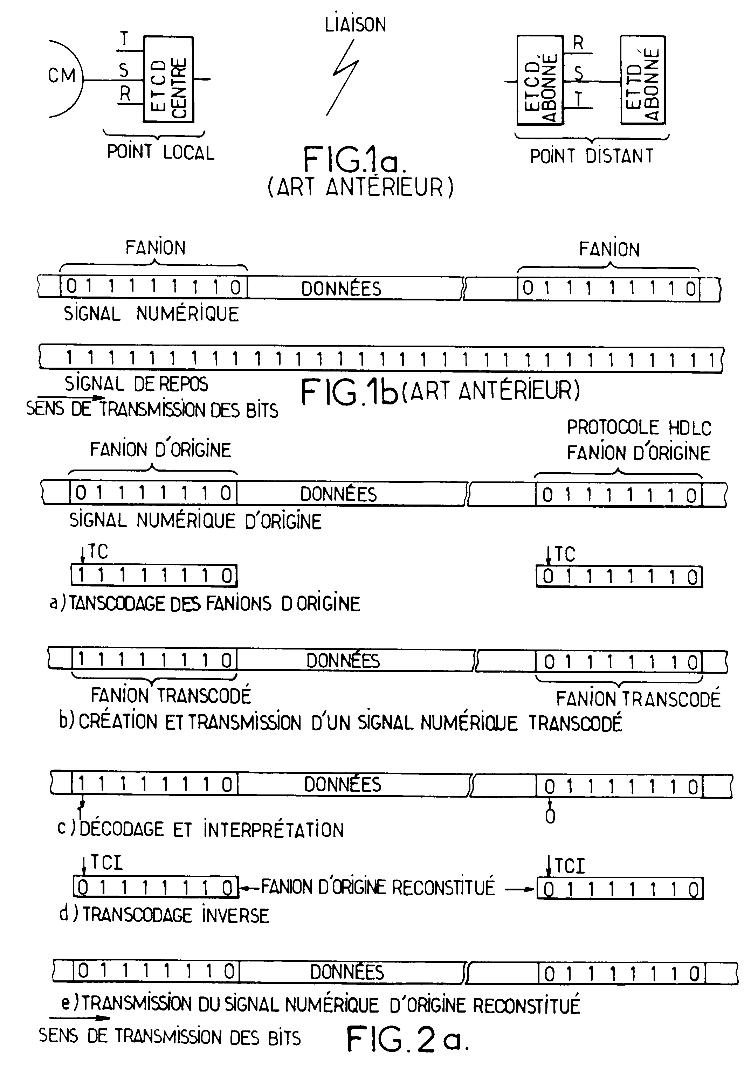

D'une manière générale, la liaison bidirectionnelle précitée permet d'effectuer, ainsi que représenté en figure 1a, la transmission d'informations entre un commutateur noté CM et un équipement terminal de transmission de données, ETTD, installé chez un abonné utilisateur, par l'intermédiaire d'un réseau numérique de transmission de données. On indique que la liaison entre le commutateur CM respectivement l'ETTD et le réseau numérique est effectuée par l'intermédiaire d'un équipement terminal de conversion de données ETCD, consistant essentiellement en une jonction modem, par l'intermédiaire d'une ligne de transmission T, d'une ligne de réception R et d'une ligne de signaux d'horloge S. Les informations transmises sous forme numérique ont la structure représentée, dans le cas général, en figure 1b. Dans le cas où un ETTD considéré à un point local est indisponible par exemple, celui-ci transmet en direction d'un ETTD destinataire, situé à un point distant, un signal de repos comportant notamment une suite ininterrompue de bits égaux à 1.

Afin d'assurer la gestion et la surveillance de tels équipements complexes, il est opportun de pouvoir échanger, entre un point local et un point distant, des informations auxiliaires permettant de rendre compte de l'état des différents éléments constitutifs de la liaison, et/ou des équipements de l'abonné, afin, notamment, de déterminer rapidement et de manière certaine, en cas d'anomalie de fonctionnement de la liaison, si la responsabilité de cette anomalie incombe aux équipements de l'abonné ou à la liaison proprement dite. La détection de ces anomalies au niveau local permet de simplifier et d'accélérer les interventions nécessaires à la correction du dérangement provoqué par le dysfonctionnement détecté.

Un procédé de transmission de motifs a été décrit par la demande de brevet européen EP-A-O 444 832. Toutefois, dans le procédé décrit par ce document, les motifs sont insérés dans une séquence de repos (IDLE) et non pas dans des fanions. Un tel procédé ne peut valablement être mis en oeuvre sur des lignes de transmission dont le taux d'occupation serait tel qu'aucune séquence de repos ne soit présente.

La présente invention a pour objectif général de permettre, notamment, la gestion et la surveillance de tels équipements par la mise en oeuvre d'un procédé et d'un système de transmission bidirectionnelle d'informations auxiliaires sur une liaison bidirectionnelle de transmission de données numériques HDLC.

Un autre objet de la présente invention est également la mise en oeuvre d'un procédé et d'un système de transmission de données auxiliaires sur une liaison bidirectionnelle de transmission de données numériques HDLC, en l'absence de toute dégradation, ou perturbation, tant en ce qui concerne la qualité du rapport signal à bruit que les caractéristiques de la bande passante, du signal d'origine, constitué par les données numériques HDLC.

Un autre objet de la présente invention est enfin, outre l'échange d'informations auxiliaires entre un point local et un point distant, la mise en oeuvre d'un procédé et d'un système permettant la commande à distance, du point local au point distant, de certaines opérations permettant d'effectuer ces tâches de gestion et de surveillance.

Le procédé de transmission d'informations auxiliaires sur une liaison bidirectionnelle de tranmission de données numériques HDLC, formant canal primaire de transmission d'un signal numérique d'origine entre un point local et un point distant, objet de la présente invention, liaison sur laquelle au moins une succession de fanions est émise selon le protocole HDLC, les données numériques étant transmises entre deux ou plusieurs fanions d'origine successifs et un signal de repos ou une succession de fanions étant transmis sur ledit canal primaire en l'absence de transmission de données numériques, est remarquable en ce qu'il consiste au moins, au point local et/ou distant, en vue de former un canal secondaire de transmission des informations auxiliaires, à transcoder l'un au moins des fanions d'origine à partir desdites informations auxiliaires à transmetre, pour engendrer au moins un fanion transcodé, à transmettre vers ledit point distant et/ou local ,sur ladite liaison, ledit fanion transcodé et lesdites données numériques, pour engendrer un signal numérique transcodé, et au point distant et/ou local, à décoder le fanion transcodé pour restituer et interpréter ladite information auxiliaire, à transcoder en inverse ledit fanion transcodé pour reconstituer le fanion d'origine, à transmettre le fanion d'origine reconstitué et les données numériques pour reconstituer le signal numérique d'origine vers une utilisation du point local ou distant, ce qui permet d'assurer, d'une part, la transmission des données numériques en transparence entre point local et point distant ou réciproquement et, d'autre part, la transmission et l'interprétation des informations auxiliaires entre le point local et le point distant, ou réciproquement, sur ledit canal secondaire.

Le système de transmission d'informations auxiliaires sur une liaison bidirectionnelle de transmission de données numériques HDLC, formant canal primaire de transmission d'un signal numérique d'origine entre un point local et un point distant, objet de la présente invention, liaison sur laquelle au moins une succession de fanions est émise selon le protocole HDLC, les données numériques étant transmises entre deux ou plusieurs fanions d'origine successifs, un signal de repos ou une succession de fanions étant transmis sur le canal primaire en l'absence de transmission de données numériques, est remarquable en ce que, en vue de former un canal secondaire de transmission des informations auxiliaires, ce système comprend au niveau des points local et distant, un dispositif émetteur-récepteur permettant, d'une part, de substituer à au moins un fanion d'origine un fanion transcodé à partir des informations auxiliaires, et, d'autre part, de substituer à tout fanion transcodé un fanion d'origine reconstitué, pour délivrer un signal numérique d'origine reconstitué vers une utilisation, le dispositif émetteur-récepteur permettant en outre au niveau du point local respectivement distant d'interpréter les informations auxiliaires transmises au moyen du ou des fanions transcodés et d'engendrer au moins un message de réponse sur le canal secondaire par l'intermédiaire d'au moins un fanion transcodé.

Le procédé et le système de transmission d'informations auxiliaires sur une liaison bidirectionnelle de transmission de données HDLC objets de l'invention trouvent application à la transmission d'informations auxiliaires de type quelconque et à la surveillance et à la gestion des liaisons et lignes ou réseaux supports de la transmission de ces informations.

Le procédé et le système de transmission d'informations auxiliaires sur une liaison bidirectionnelle de transmission de données numériques HDLC, et leurs applications, seront mieux compris à la lecture de la description et à l'observation des dessins ci-après, dans lesquels outre les figures 1a et 1b, relatives à l'art antérieur,

- la figure 2a représente, à titre illustratif, les étapes successives permettant la mise en oeuvre du procédé selon l'invention,

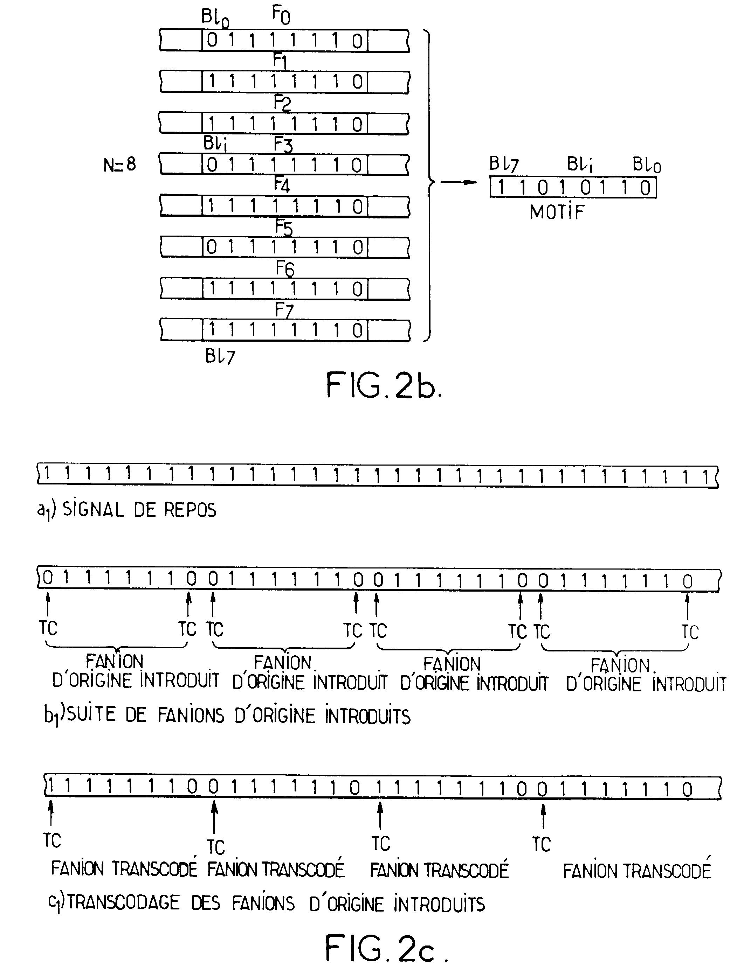

- la figure 2b représente, à titre d'exemple, une variante du mode opératoire permettant la mise en oeuvre du processus représenté en figure 2a,
- la figure 2c représente une étape supplémentaire de mise en oeuvre du procédé objet de l'invention représenté en figure 2a, laquelle permet d'augmenter et d'améliorer le débit des informations auxiliaires transmises de manière particulièrement avantageuse,

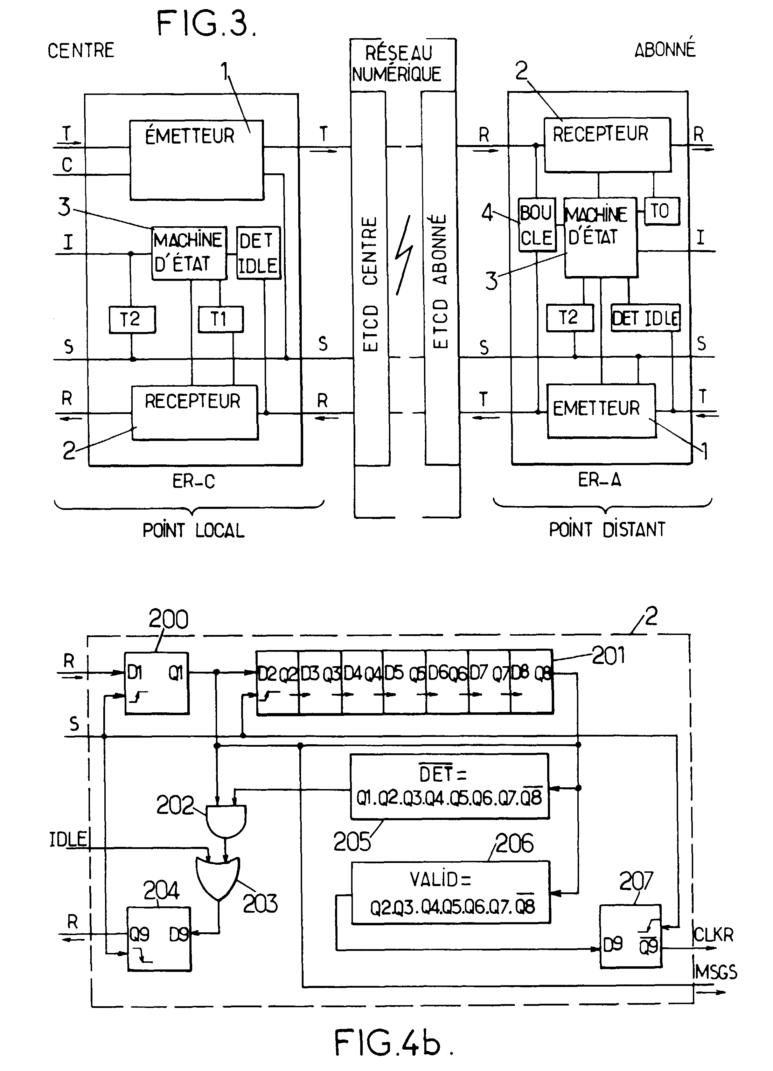

- la figure 3 représente, de manière générale, la configuration d'un système de transmission d'informations auxiliaires sur une liaison bidirectionnelle de transmission de données numériques HDLC, conforme à l'objet de la présente invention, et comportant un dispositif émetteur récepteur de fanions transcodés, insérés en un point local et en un point distant de la liaison,

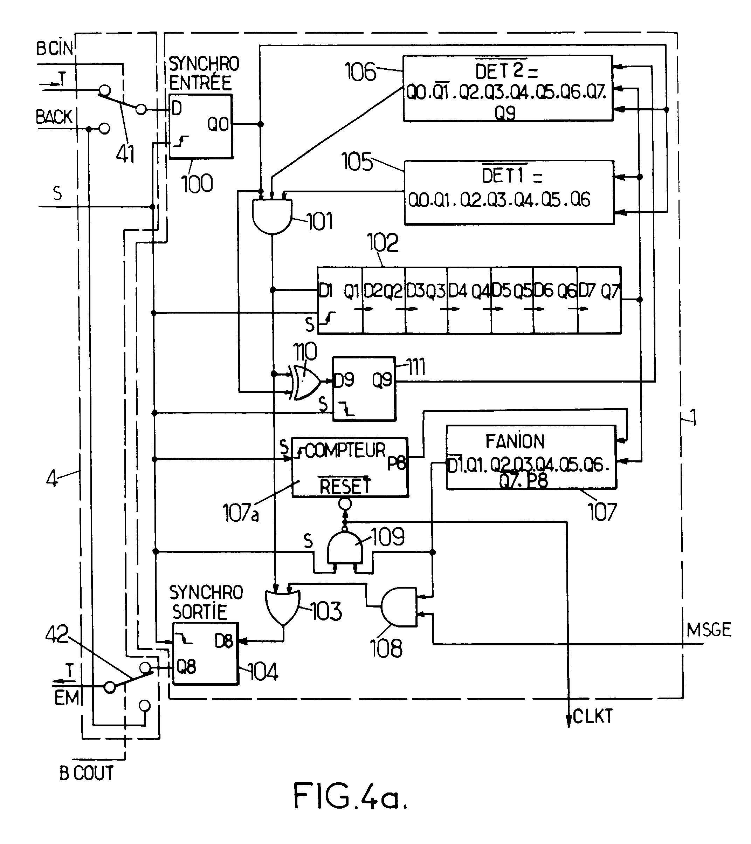

- les figures 4a et 4b représentent un mode de réalisation particulier avantageux d'un circuit émetteur de fanions transcodés respectivement d'un circuit récepteur de fanions transcodés, permettant de reconstituer des fanions d'origine, ces circuits étant des circuits constitutifs d'un dispositif émetteur-récepteur représenté en figure 3,

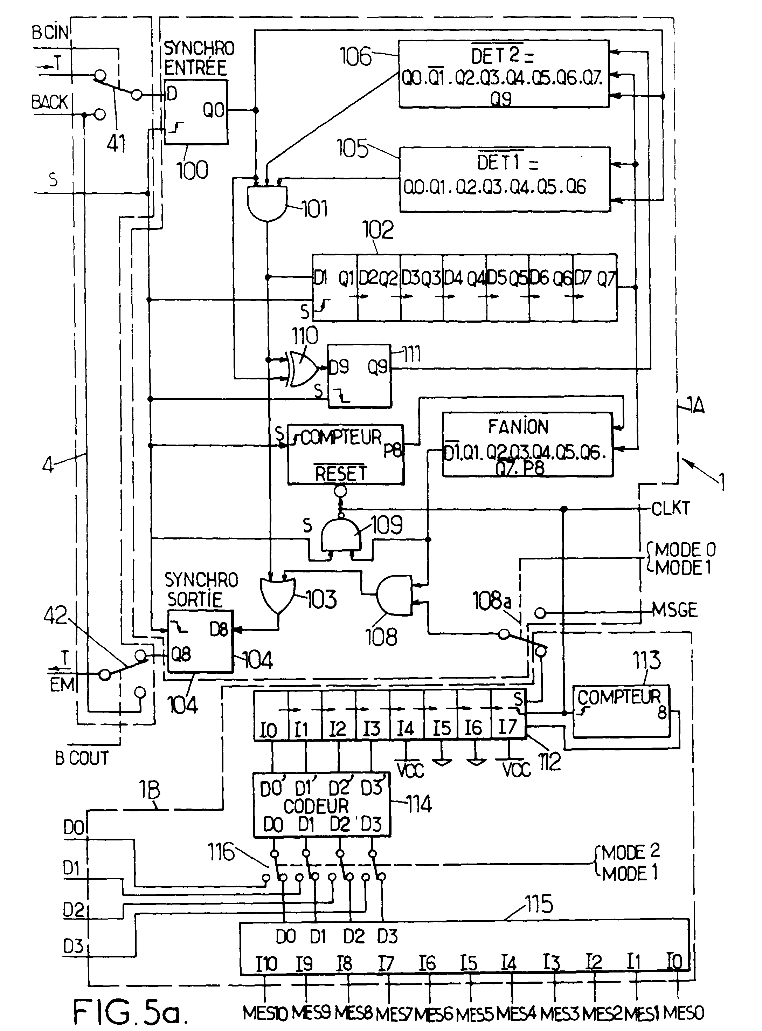

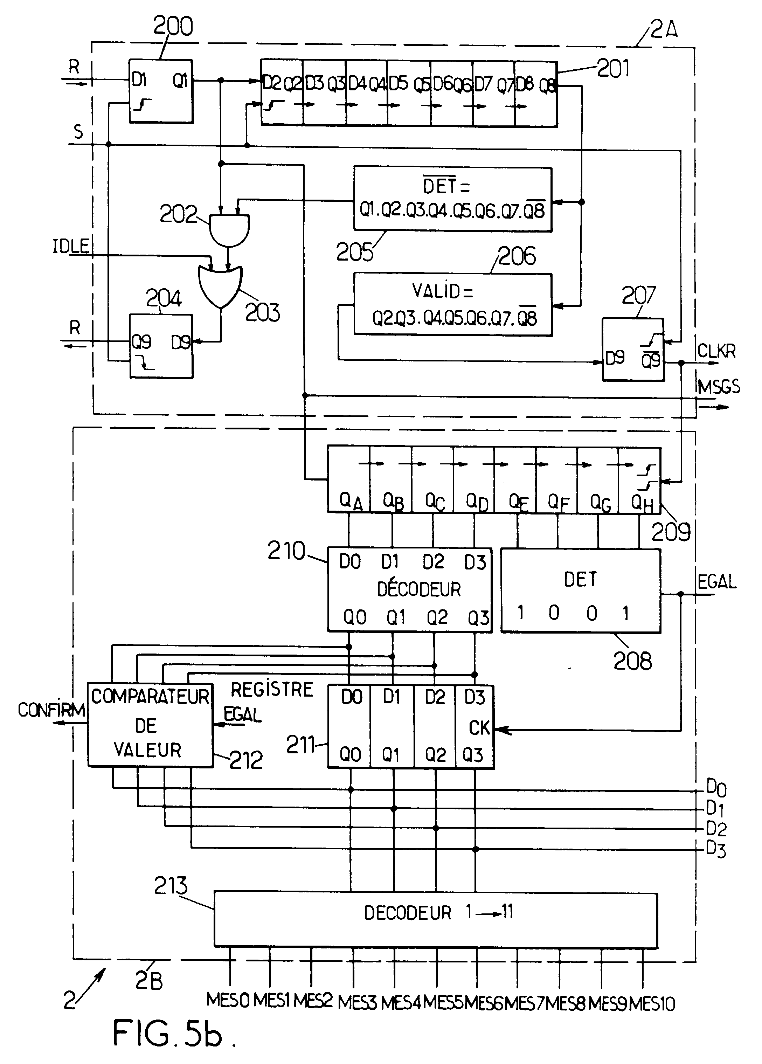

- les figures 5a et 5b représentent une variante de réalisation avantageuse du circuit émetteur respectivement du circuit récepteur représentés en figure 4a et 4b, dans le cas où l'information auxiliaire est transmise par l'intermédiaire de motifs formés par des mots codés sur un nombre donné de bits,

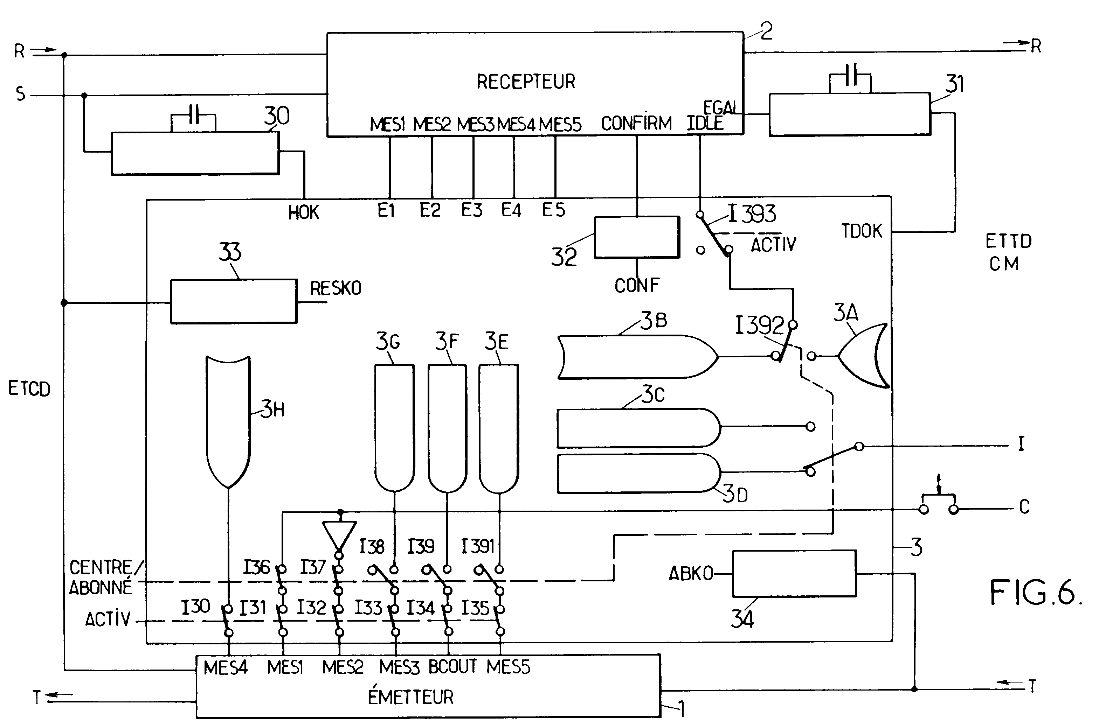

- la figure 6 représente un mode de réalisation avantageux d'un machine d'état, incluse dans un dispositif émetteur-récepteur, afin de permettre d'une part l'interprétation des informations auxiliaires transmises, et, d'autre part, l'utilisation de ces informations auxiliaires au point local et/ou distant.

Une description plus détaillée du procédé de transmission d'informations auxiliaires sur une liaison bidirectionnelle de transmission de données numériques HDLC conforme à l'objet de la présente invention sera maintenant donnée en liaison avec les figures 2a et suivantes.

Sur les figures 1a et 1b précédentes, on a représenté la structure d'un réseau, ou à tout le moins d'une liaison bidirectionnelle, de transmission de données numériques selon le protocole HDLC, et le signal numérique transmis selon ce protocole, ainsi que le signal de repos susceptible d'être présent sur la liaison précitée, soit en raison d'une commande d'arrêt sur erreur de transcription d'un message, signal ABORT, engendré par exemple au point distant par l'abonné, ou plus généralement lorsque par exemple le dispositif ETTD abonné est indisponible. Ce signal de repos est désigné par "idle" en langage anglo-saxon.

En ce qui concerne le signal numérique proprement dit, les données numériques engendrées par ou vers le point distant et l'ETTD abonné sont transmises entre deux ou plus fanions successifs, les fanions ayant par exemple une structure numérique représentée en figure 1a, laquelle correspond à la valeur codée 7E sur un octet.

Le signal de repos apparaît comme une suite ininterrompue de valeurs binaires égales à 1. Le signal numérique et le signal de repos sont transmis sur la liaison bidirectionnelle, laquelle forme un canal primaire de transmission des données numériques, canal présentant des caractéristiques de bande passante et de débit bien déterminées. A titre d'exemple, on indique que le débit de transmission des données peut avoir pour valeur 9 600 b/s sur le canal primaire précité.

Ainsi qu'on l'a représenté en figure 2a, le procédé objet de la présente invention consiste au moins au point local et/ou distant, le point local étant par convention le point de la liaison constitué par le commutateur CM et ses équipements ETCD et le point distant étant formé par l'ETTD abonné et l'ETCD abonné, à transcoder l'un au moins des fanions d'origine, à partir des informations auxiliaires à transmettre, pour engendrer au moins un fanion transcodé, puis à transmettre vers le point distant et/ou local sur la liaison, le fanion transcodé et les données numériques pour engendrer un signal numérique transcodé. Bien entendu, les données numériques à transmettre ne sont pas modifiées et le signal numérique transcodé est donc formé par le ou les fanions transcodés associés aux données numériques d'origine.

La transmission du signal numérique transcodé sur la liaison ayant été effectuée vers le point distant et/ou le point local, le procédé selon l'invention consiste alors à décoder le fanion transcodé pour restituer et interpréter l'information auxiliaire, puis à transcoder en inverse le fanion transcodé pour reconstituer le fanion d'origine. L'opération de transcodage permet ainsi d'engendrer un fanion d'origine reconstitué et les données numériques et le fanion d'origine reconstitué précité permettent alors de reconstituer et de transmettre le signal numérique d'origine vers une utilisation du point local et/ou distant, utilisation non représentée en figure 1a, ce qui permet d'assurer, d'une part, la transmission des données numériques en transparence entre le point local et le point distant sur le canal primaire, et, d'autre part, la transmission et l'interprétation des informations auxiliaires entre le point local et le point distant, ou réciproquement sur un canal secondaire formé du fait du transcodage, puis de transcodage inverse du ou des fanions d'origine, respectivement du ou des fanions transcodés.

Sur la figure 2a, l'opération de transcodage est notée TC, et l'opération de transcodage inverse est notée TCI.

D'une manière générale, on indique que le transcodage de chaque fanion d'origine, respectivement le transcodage inverse, est effectué sur au moins un bit du fanion précité. Dans un cas simple de mise en oeuvre du processus de transcodage, respectivement de transcodage inverse, on indique que pour les fanions 7E précités, le transcodage, respectivement le transcodage inverse, est effectué sur le dernier bit transmis constitutif du fanion, c'est-à-dire sur le dernier bit transmis de valeur 0 du fanion d'origine, ainsi que représenté à la figure 2a aux points a et d de celle-ci. On comprend également que, ce bit ayant la valeur zéro dans le fanion d'origine, l'opération de transcodage TC consiste alors à forcer cette valeur à la valeur 1 ou au contraire à maintenir cette valeur à la valeur 0, en fonction d'une valeur de codage correspondante de l'information auxiliaire à transmettre, ainsi qu'il sera décrit ultérieurement dans la description.

Au contraire, l'opération de transcodage inverse TCI consiste, soit à forcer la valeur du dernier bit reçu du fanion transcodé à la valeur 0 si cette valeur est égale à 1, ou au contraire à maintenir cette valeur égale à 0 si celle-ci est égale à 0.

On comprend bien sûr que les opérations de transcodage TC respectivement de transcodage inverse TCI sont effectuées suite à une discrimination des fanions d'origine respectivement les fanions transcodés sur le flux numérique du signal numérique d'origine, respectivement sur le flux numérique du signal numérique transcodé transmis.

D'une manière générale, on comprend également, ainsi que représenté en figure 2b, que les opérations de transcodage TC d'un fanion d'origine, de transmission du fanion transcodé et de décodage et de transcodage inverse TCI du fanion transcodé sont effectuées sur une pluralité de fanions successifs, notés $F_0$ à $F_7$ sur la figure 2b. Ces fanions successifs sont regroupés, sauf pendant leur transmission, en une séquence formée d'un nombre N déterminé de fanions successifs, N = 8 dans le cas de la figure 2b, ce qui permet d'effectuer le transcodage des fanions d'origine, à partir de l'information auxiliaire, sur des motifs formés par des mots de N bits correspondants. Sur la figure 2b, le motif est ainsi formé de 8 bits, les bits $BI_0$ à $BI_7$, correspondant donc à un octet pour N = 8 des huit fanions successifs, $F_0$ à $F_7$, $BI_0$ à $BI_7$ désignant bien entendu les bits transcodés des fanions précités.

D'une manière générale, on indique que le procédé objet de la présente invention permet la transmission des données auxiliaires sous forme de messages, successions de motifs au format multiple et les données auxiliaires ainsi transmises par le canal secondaire permettent de transmettre :

-   des messages de longueur variable synchronisés par des identificateurs uniques non redondants avec les données du messages,
-   des messages de longueur variable utilisant une synchronisation et un contrôle d'intégrité,
-   des messages de longueur fixe codés ou non codés suivant un élément ou plusieurs de synchronisation,
-   des messages élémentaires,
-   le cas échéant, des messages du type asynchrone contenant un bit d'ouverture et un bit de fermeture.

Le débit sur le canal secondaire est cependant extrêmement fluctuant et il dépend du débit de la liaison, du type d'application, du nombre de voies logiques, de la longueur maximum des trames, et, dans une certaine mesure, de l'heure, c'est-à-dire du trafic sur le canal primaire.

Dans un trafic de type transactionnel, où le point local et le point distant dialoguent, le flux de données sur le canal secondaire est relativement symétrique. Par contre, dans le cas d'un transfert de fichiers, le débit dans le sens émetteur du fichier vers récepteur du fichier présente, sur le canal secondaire, une valeur faible, alors que le débit en sens inverse est élevé.

Il n'est donc possible de déterminer qu'une valeur minimale, pour le débit du canal secondaire, cette valeur risquant toutefois d'être éloignée de la valeur réelle.

Afin de remédier à l'inconvénient précité, et conformément à un autre aspect particulièrement avantageux du procédé objet de la présente invention, celui-ci peut consister, ainsi que représenté en figure 2c, sur détection du signal de repos sur la liaison, à remplacer le signal de repos par une suite de fanions d'origine substitués, fanions d'origine engendrés au niveau local ou distant préalablement à la formation du canal secondaire. Ce mode opératoire permet alors d'augmenter le débit de l'information auxiliaire transmise sur le canal secondaire, conformément au procédé objet de la présente invention précédemment décrit dans la description, les informations auxiliaires permettant à nouveau la mise en oeuvre de ce procédé sur les fanions d'origine introduits en lieu et place du signal de repos, ainsi que représenté sur la même figure 2c.

On indique que le processus précité est particulièrement avantageux et sans risque pour la transmission des informations ou données numériques sur le canal primaire, car tout bit de valeur 0 qui ne suit pas 6 éléments binaires consécutifs à la valeur 1 est transmis sans altération. Ainsi, tout fanion d'origine signifiant la reprise du trafic après un état correspondant au signal de repos est immédiatement et à coup sûr transmis.

Une description plus détaillée d'un système de transmission d'informations auxiliaires permettant la mise en oeuvre du procédé objet de la présente invention précédemment décrit sera maintenant donnée en liaison avec la figure 3.

Ainsi qu'on l'a représenté sur la figure précitée, la liaison étant bien entendu formée par une ligne de transmission T et une ligne de réception R ainsi qu'une ligne transmettant un signal d'horloge S reliant respectivement le commutateur CM centre à un ETCD centre, respectivement l'ETTD à l'ETCD abonné, les ETCD centre et abonné étant reliés par réseau numérique, comporte, en vue de former un canal secondaire de transmission des informations auxiliaires, au niveau du point local et distant, un dispositif émetteur-récepteur, noté ER-C, respectivement ER-A, permettant, d'une part, de substituer à au moins un fanion d'origine un fanion transcodé à partir des informations auxiliaires, et, d'autre part, de substituer à ce fanion transcodé un fanion d'origine pour délivrer un signal numérique d'origine reconstitué vers une utilisation. Chaque dispositif émetteur-récepteur permet en outre au niveau du point local, respectivement distant, d'interpréter les informations auxiliaires transmises au moyen du ou des fanions transcodés, et d'engendrer au moins un message de réponse sur le canal secondaire, par l'intermédiaire d'au moins un fanion transcodé.

Ainsi qu'on l'a représenté en figure 3, les dispositifs émetteurs-récepteurs placés au point local, respectivement au point distant, sont identiques et connectés en série sur les lignes de transmission T, réception R et signal d'horloge S, ainsi qu'il sera décrit ultérieurement dans la description. On indique bien sûr que le caractère d'identité entre le dispositif émetteur-récepteur ER-C placé au point local et le dispositif émetteur-récepteur ER-A placé au point distant correspond à une identité structurelle, mais que toutefois il est possible de personnaliser la configuration de chaque dispositif émetteur-récepteur ER-C, respectivement ER-A, afin de permettre la réalisation de tâches particulières au point local, respectivement distant, ainsi qu'il sera décrit ultérieurement dans la description.

Ainsi qu'on l'a représenté sur la figure 3 précitée, chaque dispositif émetteur-récepteur ER-C ou ER-A comprend au moins un circuit 1 émetteur de fanions transcodés, ce circuit émetteur recevant le signal numérique d'origine sur la ligne de transmission, T flèche entrante, et délivrant après transcodage le signal numérique transcodé sur la même ligne de transmission, T flèche sortante.

Le dispositif émetteur-récepteur comprend également un circuit récepteur 2 de fanion transcodé sur la ligne de réception, R flèche entrante, et délivre, suite à une opération de transcodage inverse des fanions transcodés le signal numérique d'origine reconstitué sur la ligne de réception, R flèche sortante.

De manière plus pratique, on indique que chaque dispositif émetteur-récepteur ER-C ou ER-A comprend, bien entendu, un circuit de détection et de discrimination du signal de repos permettant d'engendrer un signal de commande de présence du signal de repos à l'entrée du circuit récepteur 2, respectivement à la sortie du circuit émetteur 1, ainsi qu'il sera décrit ultérieurement dans la description.

Enfin, chaque dispositif émetteur-récepteur ER-C, respectivement ER-A, comprend un circuit logique d'état 3, ou machine d'état 3, ce circuit étant commandé notamment par le signal de commande de présence du signal de repos, ce circuit 3 logique d'état permettant, suite à interprétation des informations auxiliaires reçues, de délivrer, d'une part, un signal d'information d'état de la liaison, le signal I représenté pour le dispositif ER-C, respectivement le dispositif ER-A de la figure 3, et, d'autre part, de commander le circuit émetteur 1 et/ou le circuit récepteur 2 pour assurer le transcodage des fanions d'origine, respectivement le transcodage inverse des fanions transcodés, ainsi qu'il sera décrit ci-après dans la description.

D'une manière particulièrement avantageuse, chaque dispositif émetteur-récepteur peut comporter en outre un circuit 4 de commande de bouclage entre l'entrée du circuit récepteur 2 et la sortie du circuit émetteur 1, ce circuit 4 de commande de bouclage étant bien entendu commandé par le circuit logique d'état 3. Ce circuit de commande de bouclage 4 permet alors d'effectuer par exemple des opérations de bouclage du réseau numérique à des fins d'assistance et de gestion de celui-ci, ainsi qu'il sera décrit ultérieurement dans la description.

Le circuit de commande de bouclage 4 a été représenté uniquement sur le dispositif émetteur ER-A placé au point distant, mais il est bien entendu que ce circuit est présent dans tout dispositif placé au point local ou distant, bien que la configuration du dispositif ER-C placé au point local ne nécessite pas l'activation opérationnelle du circuit 4 de commande de bouclage.

Enfin, chaque dispositif émetteur-récepteur ER-C, ER-A, comprend différents éléments de temporisation T0, T1, T2, dont la fonction sera explicitée ultérieurement dans la description.

Une description plus détaillée d'un circuit émetteur 1 et d'un circuit récepteur 2 permettant la mise en oeuvre d'un dispositif émetteur-récepteur ER-C, respectivement ER-A, sera maintenant donnée en liaison avec les figures 4a et 4b, dans un premier mode opératoire, dit mode 0, ce mode correspondant au cas où les données auxiliaires sont délivrées en mode synchrone pour transcodage des fanions d'origine successifs.

Ainsi que représenté sur la figure 3, le circuit émetteur 1 est placé en série sur la transmission des données, la ligne T flèche entrante, le dispositif émetteur ER-C ou ER-A étant placé entre le commutateur CM et l'ETCD centre, respectivement entre l'ETTD, et l'ETCD abonné. Dans tous les cas, le circuit émetteur 1 est rythmé par le signal d'horloge S fourni par l'ETCD centre ou abonné.

Ainsi qu'on l'a représenté sur la figure 4a, on indique que les données numériques à transmettre sont délivrées par exemple par l'ETTD sur le front descendant du signal d'horloge d'émission S. Ces données sont enregistrées dans une bascule, notée 100, sur le front montant du signal d'horloge.

La sortie de la bascule 100 est câblée sur une entrée d'un circuit ET 101, dont la sortie est appliquée d'une part sur un registre à décalage 102, comportant 7 cellules ou étages, notés D1 à D7, les sorties de ces étages étant notées respectivement Q1 à Q7, et, d'autre part, sur l'entrée d'un circuit OU 103, dont la sortie est elle-même connectée sur une bascule 104 assurant la fonction de bascule de synchronisation de sortie. La sortie notée Q8 de la bascule 104 est reliée à la ligne de transmission T flèche sortante correspondant à la ligne de liaison vers l'ETCD abonné ou respectivement centre.

De manière plus précise, on indique que la bascule 104 est commandée par le front descendant de l'horloge d'émission, le signal S. La sortie Q8 de la bascule précitée délivre donc ces informations sur un front descendant en respectant ainsi, avec un bit de décalage, le séquencement de l'émission des données par l'ETTD.

Le registre à décalage 102 formé par les cellules Q1 à Q7 permet de mémoriser les 7 bits précédemment transmis du flot de données numériques normalement présentes sur le canal primaire.

Lorsque les sorties Q0 à Q6 de la bascule 100, et de chaque cellule du registre à décalage 102 sont à 1 simultanément, cela signifie qu'un signal de repos est transmis sur la ligne de transmission, c'est-à-dire sur le canal primaire, et que conformément au procédé objet de la présente invention dans une variante de réalisation, il est alors possible de transformer ce signal en une suite de fanions transcodés d'origine.

A cet effet, un premier détecteur câblé noté 105 est connecté, d'une part, sur la sortie Q0 de la bascule 100, et, d'autre part, sur l'ensemble des sorties Q1 à Q6 du registre à décalage 102. Sur la figure 4a, on indique que la liaison entre le registre à décalage 102 et l'entrée du détecteur 105 est une liaison du type BUS permettant, de fait, la liaison entre chaque sortie Q1 à Q6 et une entrée correspondante du détecteur 105.

On indique que le détecteur 105 permet d'effectuer l'opération logique de type NON-ET vérifiant la relation suivante :

$$\overline{DET1} = Q0.Q1.Q2.Q3.Q4.Q5.Q6.$$

Ce premier détecteur câblé connecté à l'entrée de la porte ET 101 permet de porter cette entrée à la valeur 0, si le bit courant, c'est-à-dire le bit mémorisé dans la bascule 100, est à la valeur 1 et que les 6 bits précédents l'étaient également. Comme il s'agit nécessairement de 7 bits provenant d'un signal de repos, la valeur 0 est ainsi forcée en sortie de la porte ET 101. La sortie de la porte précitée passe à la valeur 0 pendant l'état haut du signal d'horloge d'émission S.

Un second détecteur 106 est prévu, de type détecteur câblé, lequel est câblé sur les sorties Q0 à Q7 précédemment mentionnées, ainsi que sur la sortie Q9 d'une bascule 111 recevant bien entendu le signal de synchronisation S et dont l'entrée D9 est commandée par une porte OU-exclusif 110 dont les entrées sont commandées, d'une part, par la sortie du circuit ET 101, et par la sortie Q0 de la bascule d'entrée 100. Le circuit détecteur 106 vérifie l'équation logique :

$$\overline{DET2} = Q0.\overline{Q1}. Q2.Q3.Q4.Q5.Q6.Q7.Q9.$$

Le deuxième détecteur 106 a pour but de forcer à 0 le bit suivant afin de former le prochain fanion d'origine substitué introduit en lieu et place du signal de repos, ainsi que montré sur la figure 2c au point b.

On note que la bascule 111 est commandée par le circuit 110, lequel est actif si Q0 est à la valeur 1, le bit mémorisé dans la bascule 100 ayant cette valeur, et que la sortie de la porte ET 101 est à 0, c'est-à-dire en fait que le premier détecteur 105 a déjà forcé un 0 sur le bit de rang antérieur.

La bascule 111 est cadencée sur le front descendant du signal d'horloge d'émission S, ce qui permet d'éviter les phénomènes transitoires liés à la réaction des détecteurs 105 et 106 et donc d'enregistrer une donnée stable.

Ainsi le second détecteur 106 force l'entrée de la porte ET 101 à la valeur 0, si Q0 est 1, Q1 est à 0, et que les sorties Q2 à Q7 du registre à décalage 102 sont à la valeur 1 et que le critère de modification du bit précédent est satisfait, c'est-à-dire si Q9 est à la valeur 1.

Ainsi, et de manière illustrative, on indique que le premier détecteur 105 forme le dernier 0 d'un fanion d'origine introduit en lieu et place du signal de repos, alors que le second détecteur 106 forme le premier bit à la valeur 0 du fanion suivant, les fanions successifs étant bien entendu ainsi substitués au signal de repos précité.

La configuration représentée en figure 4a permet ainsi de transformer un état de signal de repos en une suite continue de fanions d'origine substitués à ce dernier, tout en étant parfaitement transparent au fanion d'origine effectivement émis par l'ETTD.

A ce stade, toute suite de bits à la valeur 1, qu'elle provienne d'un signal ABORT ou d'un signal de repos proprement dit, est transformée en une succession de fanions d'origine. A titre de précaution, une valeur de seuil du nombre de bits constitutifs de la suite précitée peut être introduite.

Si pendant la transformation précitée d'un signal de repos en fanion d'origine substitué à ce dernier, un véritable fanion d'origine est reçu, c'est-à-dire un fanion d'origine émis par exemple par l'ETTD, il est immédiatement transmis, l'ensemble constitué par les circuits précités étant parfaitement transparent aux fanions d'origine reçus de l'ETTD. Au moment de la reprise, il est possible et probable qu'un octet incomplet soit engendré, ce qui peut être interprété comme une trame mauvaise. Une telle situation ne perturbe pas l'ETTD ou le commutateur CM, lesquels alors peuvent se synchroniser sur le fanion d'origine suivant cet octet détérioré. Les circuits précités constituent en fait le système détecteur de signal de repos de chaque circuit émetteur 1, ces circuits permettant en outre de remplacer ce signal de repos par une suite de fanions d'origine substitués.

Le circuit émetteur proprement dit de fanions transcodés est également représenté sur la figure 4a. Ce circuit émetteur a pour but d'insérer le message ou informations auxiliaires sur le canal secondaire par transcodage des fanions d'origine ou des fanions d'origine substitués, ainsi qu'il sera décrit ci-après.

Câblé sur la sortie de la porte ET 101 et sur les sorties Q1 à Q7 du registre à décalage 102, ce câblage étant représenté par convention par une liaison filaire simple, un troisième détecteur 107 est prévu, lequel permet d'indiquer que l'état 0, qui va être transmis sur le front descendant suivant du signal d'horloge d'émission S, est le dernier bit d'un fanion.

Le détecteur 107 est un détecteur câblé, lequel vérifie la relation :

$$\text{FANION} = \overline{D1}.Q1.Q2.Q3.Q4.Q5.Q6.\overline{Q7}.P8.$$

Le détecteur 107 précité commande par sa sortie une première entrée d'une porte ET 108, laquelle reçoit sur une deuxième entrée le message permettant d'engendrer les données auxiliaires, ce message étant noté MSGE, et correspondant à une suite de bits représentatifs des informations auxiliaires à transmettre sur le canal secondaire. La sortie de la porte ET 108 est connectée sur une deuxième entrée de la porte OU 103, laquelle est placée en série sur le canal primaire, c'est-à-dire entre la sortie de la porte ET 101 et l'entrée de la bascule 104, bascule de synchronistion finale.

Lors de la reprise d'une émission de fanions d'origine par l'ETTD par exemple, un fanion d'origine peut suivre immédiatement un fanion substitué engendré par l'ensemble des circuits représentés sur la figure 4a.

Au contraire, lorsque le fanion d'origine intervient pendant les 6 premiers bits d'un fanion d'origine substitué, un motif 0, 01, 011, 0111, 01111 ou 011111 est transmis entre deux fanions corrects. L'ETTD doit alors se synchroniser sur le fanion et ignorer l'octet incomplet.

Dans un cas litigieux, le fanion d'origine engendré par l'ETTD apparaît pendant le huitième état du fanion substitué, c'est-à-dire pendant la formation du dernier bit de celui-ci et son transcodage à la valeur 0. Un seul 0 est donc utilisé pour deux fanions consécutifs, ce qui présente un point de litige, ce cas rejoignant le passage à l'état de signal de repos.

Pour éviter les aléas du passage au signal de repos et le dernier point précité lors de la reprise, un compteur 107a est prévu, lequel interdit que le détecteur 107 soit actif, si moins de 8 bits séparent la dernière valeur 1 de ce dernier de la valeur du bit actuel.

Ainsi, dans la succession suivante :

**EP 0 629 070 B1**

$$\overbrace{\phantom{0}}^{} \overbrace{01111110}^{F}11111100\overbrace{01111110}^{F},$$

le détecteur 107 est actif sur les bits fléchés, et inactif sur le quinzième élément. Ce mode opératoire permet d'ignorer la séquence intermédiaire entre les deux fanions, notés F et F. Le compteur 107a est incrémenté par le signal d'horloge S et remis à zéro par l'intermédiaire d'une porte NON-ET 109 commandée par la sortie du détecteur 107. Si, lorsque ce détecteur 107 est actif, le bit du message sur le canal secondaire est à la valeur 1 sur l'entrée de la porte ET 108, alors la sortie de la porte OU 103 est forcée à 1 pendant l'état haut du signal d'horloge S. Si le bit du message sur le canal secondaire, c'est-à-dire à l'entrée de la porte ET 108, est à la valeur 0, alors aucune modification n'est effectuée. La bascule de sortie 104 permet de faire disparaître les transitoires de commutation en sortie de la porte OU 103.

On indique en outre que le circuit représenté en figure 4a permet un fonctionnement satisfaisant du circuit émetteur dans le mode 0 précité. Dans ce mode opératoire, l'entrée de données du canal secondaire est effectuée sur l'entrée de la porte ET 108, un signal d'horloge de cadencement synchronisé sur le front descendant du signal d'horloge S étant disponible au niveau de la sortie de la porte NON-ET 109. Le signal CLKT est engendré par le circuit émetteur et permet de valider les données sur le front descendant de ce signal d'horloge.

Un circuit récepteur 2 sera maintenant décrit en liaison avec la figure 4b, ce circuit récepteur étant particulièrement adapté au fonctionnement pour une émission en mode 0 des données auxiliaires, ainsi que précédemment décrit dans la description pour le circuit émetteur.

Les données transmises sur le canal primaire sont délivrées sur la ligne R flèche entrante par l'ETCD sur le front descendant du signal d'horloge de réception S. On comprend bien sûr que le signal présent sur la ligne R est alors formé par le signal numérique transcodé constitué par les données proprement dites et les fanions transcodés, grâce à la mise en oeuvre du circuit émetteur représenté en figure 4a. Le signal transcodé est enregistré dans une première bascule 200 sur le front montant du signal d'horloge S, c'est-à-dire à un moment où ces données sont stables.

La sortie de la bascule 200 est connectée à un registre à décalage 201 à sept étages, également commandé par le front montant du signal d'horloge S. Ce registre mémorise les 7 bits reçus antérieurement au bit mémorisé par la bascule d'entrée 200. La sortie de la bascule 200 est également connectée à une première entrée d'un circuit ET 202 dont la sortie est reliée par l'intermédiaire d'un circuit OU 203 à une bascule de synchronisation de sortie, notée 204, cette bascule 204 étant cadencée sur le front descendant du signal d'horloge S. La sortie de la bascule de synchronisation 204 constitue la sortie du canal primaire du circuit récepteur 2. La bascule 204 de synchronisation en sortie permet de respecter le séquencement du signal numérique reconstitué, ainsi qu'il sera décrit ci-après dans la description, mais le circuit récepteur introduit un délai de transit de 1 bit.

Un détecteur câblé 205 présente des entrées câblées sur les sorties des cellules du registre à décalage 201, ainsi que sur la sortie Q1 de la bascule 200. Par convention, on a représenté uniquement le câblage de l'entrée du circuit détecteur 205 par une simple liaison filaire, pour ne pas surcharger le dessin.

Le circuit détecteur 205 vérifie la relation logique:

$$\overline{DET} = Q1.Q2.Q3.Q4.Q5.Q6.Q7.\overline{Q8}.$$

Il réalise une fonction NON-ET permettant de forcer la seconde entrée de la porte ET 202 à la valeur 0, si les sorties Q1 de la bascule 200 et des cellules Q2 à Q7 du registre à décalage 201 ont la valeur 1, et que la sortie Q8 de la dernière cellule du registre à décalage 201 est à la valeur 0.

Le circuit récepteur représenté en figure 4b permet de transformer les fanions transcodés à l'aide des informations auxiliaires, grâce à la mise en oeuvre du circuit représenté en figure 4a, en fanions d'origine reconstitués, ainsi que décrit précédemment dans la description.

Un second détecteur câblé 206 est prévu, ce détecteur étant câblé sur les sorties Q2 à Q8 des cellules du registre à décalage 201, ce deuxième détecteur câblé ayant pour fonction de détecter l'instant où 1 bit du canal secondaire est disponible en sortie de la bascule d'entrée 200. Cette condition est réalisée lorsque les sorties Q2 à Q7 ont la valeur 1 et que la valeur Q8 a la valeur 0. Le deuxième détecteur 206 vérifie la relation :

$$VALID = Q2.Q3.Q4.Q5.Q6.Q7.\overline{Q8}.$$

Il réalise une fonction logique de type ET sur les sorties précitées, respectivement sur la sortie complémentée de Q8. La sortie du deuxième détecteur 206 permet de commander une bascule de synchronisation auxiliaire 207, laquelle, recevant le signal d'horloge S, permet de délivrer le signal synchronisé sur les fronts descendants ou signal d'horloge, CLKR.

A ce stade, les informations auxiliaires véhiculées par le canal secondaire sont alors reçues et délivrées sur la ligne MSGS reliée à la sortie Q$_1$ et dirigées vers une utilisation non représentée en figure 4b. Ces informations auxiliaires sont ainsi obtenues sous forme d'une succession de bits lorsque l'horloge CLKR passe à la valeur 0, dans le mode opératoire en mode 0 pour la liaison secondaire ainsi constituée.

Le système objet de la présente invention peut également être conçu afin de fonctionner selon des processus ou modes d'ordre supérieur, dans lesquels les informations auxiliaires sont codées sous forme de motifs ou de messages, la commande du canal secondaire étant alors complétée conformément aux indications des figures 5a et 5b.

Sur les figures précitées, on indique que la partie circuit émetteur 1A respectivement circuit récepteur 2A porte les mêmes références que les figures 4a et 4b correspondantes.

Sur la figure 5a, on a représenté la partie commande 1B du canal secondaire dans le cas d'un fonctionnement dans les modes supérieurs particuliers, un mode 1 correspondant à la transmission des données auxiliaires regroupées sur un nombre de bits déterminé, constituant des motifs, et un mode 2 dans lequel pour constituer les motifs précités, une relation de priorité est introduite.

Dans le cas des modes 1 et 2 précités, la partie commande du canal secondaire comprend un registre à décalage 112 à sortie série et à chargement parallèle. Le chargement de ce registre à décalage 112 est commandé par un compteur 113 chaque fois qu'un nombre N, égal à 8 par exemple, de cycles de l'horloge de cadencement et de synchronisation sur les fronts montants, CLKT, est atteint. Le décalage est commandé par le front descendant du signal d'horloge CLKT.

Ainsi qu'on l'a représenté sur la figure 5a, les quatre premiers bits à transmettre, I7, I6, I5 et I4 du registre à décalage 112, c'est-à-dire les cellules correspondantes de celui-ci, sont par exemple câblées à la valeur logique 1001 pour engendrer ainsi un motif de synchronisation sur le canal secondaire. Le motif de synchronisation est ainsi constitué par le quartet formé par les quatre premiers bits du message constitutif de l'information auxiliaire.

Le quartet d'informations auxiliaires proprement dit correspond aux entrées I0 à I3 des cellules du registre à décalage 112, lesquelles sont codées par l'intermédiaire d'un codeur 114, appliquant sur le registre, dans les cellules I0 à I3 de celui-ci, un motif déterminé non redondant avec le motif de synchronisation précité.

La table d'encodage du codeur 114 peut être la suivante :

| DO | D1 | D2 | D3 | DO' | D1' | D2' | D3' |
|----|----|----|----|-----|-----|-----|-----|
| 0 | 0 | 0 | 0 | 0 | 0 | 0 | 0 |
| 1 | 0 | 0 | 0 | 1 | 0 | 0 | 0 |
| 0 | 1 | 0 | 0 | 1 | 0 | 1 | 0 |
| 1 | 1 | 0 | 0 | 0 | 1 | 1 | 0 |
| 0 | 0 | 1 | 0 | 1 | 1 | 1 | 0 |
| 1 | 0 | 1 | 0 | 0 | 0 | 0 | 1 |
| 0 | 1 | 1 | 0 | 0 | 1 | 0 | 1 |
| 1 | 1 | 1 | 0 | 1 | 1 | 0 | 1 |
| 0 | 0 | 0 | 1 | 1 | 0 | 1 | 1 |
| 1 | 0 | 0 | 1 | 0 | 1 | 1 | 1 |
| 0 | 1 | 0 | 1 | 1 | 1 | 1 | 1 |
| toute autre valeur | | | | 0 | 0 | 0 | 0 |

Dans le processus ou mode d'ordre supérieur désigné par mode 1, les entrées D0 à D3 sont disponibles pour un utilisateur susceptible ainsi d'envoyer des messages sur le canal secondaire selon les messages précédemment indiqués dans le tableau précédent.

On voit ainsi que les bits D0, D1 et D2 sont trois valeurs d'entrée indépendantes.

Un deuxième mode d'ordre supérieur, désigné par mode 2, est prévu. Dans ce mode opératoire, les entrées du codeur 114 sont câblées sur un encodeur de priorité 115 possédant par exemple 11 entrées, notées I0 à I 10, recevant chacune des commandes d'émission de messages, notées MES 0 à MES 10. Chaque entrée de l'encodeur de priorité correspond à un message possible précité, chaque entrée étant soumise à un critère de priorité par rapport aux autres. Ainsi, le message MES 0 possède la priorité la plus faible, et le message MES 10 possède la priorité la plus forte.

Enfin, on indique qu'un commutateur multiple 116 permet, sur commande manuelle par exemple, le passage du mode 1 au mode 2 par commutation des simples entrées D0 à D3 externes aux entrées I0 à I 10 et messages MES 0 à MES 10 correspondants.

De la même façon, et afin d'autoriser le fonctionnement du circuit récepteur 2 dans les modes d'ordre supérieur 1 et 2 précités, celui-ci comprend, ainsi que représenté en figure 5b, des circuits de réception 2B de chaque message ou motif ainsi formé.

Ces circuits de réception consistent, ainsi que représenté sur la figure 5b précitée, en un registre à décalage à huit étages, noté 209, les étages étant notés QA à QH, ce registre étant un registre à entrée série et sortie parallèle qui reçoit le message disponible sur la ligne de réception de canal secondaire, MSGS, précédemment décrite en liaison avec la figure 4b. Les messages relatifs à l'information auxiliaire sont bien entendu délivrés à l'entrée de données du registre à décalage 209, lequel est cadencé par le signal d'horloge de cadencement, CLKR.

Les données correspondantes de l'information auxiliaire sont donc enregistrées dans le registre à décalage 209 à un moment où celles-ci sont parfaitement stables.

Un détecteur 208 est prévu, détecteur câblé sur les sorties QE à QH du registre à décalage 209, ce détecteur scrutant en permanence le flot de données du canal secondaire, afin de discriminer le quartet de synchronisation 1001 précédemment décrit en liaison avec la figure 5a. Lorsque ce quartet de synchronisation est détecté, le détecteur mémorise le quartet de poids faible par l'intermédiaire d'un décodeur 210, dans un registre 211, pour réaliser en fait la fonction inverse du codage d'émission. La commande d'enregistrement dans le registre est réalisée par un signal de commande, désigné par EGAL, sur discrimination du quartet de synchronisation.

De préférence, un comparateur de valeur 212 permet de vérifier, après passage du signal EGAL à la valeur 1, ou valeur vraie, les entrées et les sorties du registre 211, de façon que si le message est identique entre entrée et sortie de ce registre, un signal de confirmation CONFIRM soit engendré par le comparateur de valeur 212 pour confirmer la validité du message précité.

Dans un tel cas, dans le mode opératoire, dit mode 1, les valeurs D0 à D3 sont disponibles en sortie Q0 à Q3 du registre 211, et le quartet d'information ainsi discriminé est disponible pour une utilisation pour interprétation et, le cas échéant, action, ainsi qu'il sera décrit ultérieurement dans la description.

Dans le cas du mode opératoire supérieur, dit mode 2, un démultiplexeur 213, ou décodeur de priorité de 1 parmi 11, permet de délivrer un des onze messages en mode 2 conformément au message qui a été émis en liaison avec le dispositif de la figure 5a.

Le tableau numéro 2 ci-après donne la correspondance entre les numéros de message, les valeurs sur les sorties D0-D3 et le message présent sur les sorties QA, QB, QC, QD du registre à décalage 209 :

| Message | D0 | D1 | D2 | D3 | QA | QB | QC | QD |
|---------|----|----|----|----|----|----|----|----|
| MES 0 | 0 | 0 | 0 | 0 | 0 | 0 | 0 | 0 |
| MES 1 | 0 | 1 | 0 | 1 | 1 | 1 | 1 | 1 |
| MES 2 | 1 | 0 | 0 | 0 | 1 | 0 | 0 | 0 |
| MES 3 | 0 | 1 | 0 | 0 | 1 | 0 | 1 | 0 |
| MES 4 | 0 | 0 | 0 | 1 | 1 | 0 | 1 | 1 |
| MES 5 | 0 | 0 | 1 | 0 | 1 | 1 | 1 | 0 |
| MES 6 | 1 | 1 | 0 | 0 | 0 | 1 | 1 | 0 |
| MES 7 | 1 | 0 | 1 | 0 | 0 | 0 | 0 | 1 |
| MES 8 | 0 | 1 | 1 | 0 | 0 | 1 | 0 | 1 |
| MES 9 | 1 | 1 | 1 | 0 | 1 | 1 | 0 | 1 |
| MES 10 | 1 | 0 | 0 | 1 | 0 | 1 | 1 | 1 |

Pour le circuit récepteur représenté en figure 5b, il n'est pas nécessaire d'utiliser les entrées de sélection de mode, car toutes les broches sont des broches de sortie et les trois modes peuvent donc coexister simultanément.

Toutefois, le circuit récepteur dispose au niveau de la porte OU 203 d'une entrée, notée IDLE, correspondant à un signal de présence du signal de repos, et qui a pour effet, lorsque cette entrée est à 1, de forcer la sortie à l'état 1.

Enfin, on indique que chaque dispositif émetteur-récepteur ER-C, respectivement ER-A, comporte un circuit de bouclage 4, lequel comporte deux commutateurs de commande de bouclage, notés 41 et 42, commandés chacun par un signal de commande de bouclage d'entrée, noté BCIN, et par un signal de commande de bouclage de sortie, noté BCOUT, et une entrée de données bouclée, notée BACK.

La commande des commutateurs de bouclage 41 et 42 peut être réalisée de la façon ci-après :

- lorsque le signal de commande de bouclage de sortie, BCOUT, est à 1, le signal appliqué sur l'entrée de données bouclée, BACK, est renvoyé directement sur la sortie du circuit émetteur, sans subir aucune altération;
- lorsque le signal de commande de bouclage d'entrée, BCIN, est à 1, le signal de données bouclées, BACK, est appliqué à l'entrée de l'émetteur en lieu et place du signal numérique venant du terminal. Il subit alors toutes les modifications propres au mode opératoire du circuit émetteur 1, conformément au procédé selon l'invention, c'est-à-dire remplacement du signal de repos par des fanions substitués et insertion de messages par transcodage des fanions précités. Ceci permet d'effectuer un test à distance, à partir par exemple du dispositif émetteur-récepteur centre, ER-C, au niveau du dispositif émetteur-récepteur abonné, ER-A.

Une description plus détaillée d'une configuration appropriée d'un circuit logique d'état constituant une machine d'état 3 susceptible d'être utilisée dans un dispositif émetteur-récepteur ER-C, respectivement ER-A, sera donnée en liaison avec la figure 6.

Sur la figure 6 précitée, on reconnaît en premier lieu le circuit émetteur 1 et le circuit récepteur 2 constitutifs d'un dispositif émetteur-récepteur. Le circuit logique d'état 3 est relié au circuit émetteur et au circuit récepteur par l'intermédiaire de liaisons de type BUS par des entrées, notées E1, E2, E3, E4 et E5, respectivement par des interrupteurs I 30 à I 35 et I 393, commandés par un signal, noté ACTIV, lequel permet de commander ces interrupteurs. D'autres interrupteurs, notés I 36 à I 39 et I 391 à I 392 sont commandés par une sélection entre dispositif émetteur-récepteur ER-C au point local, respectivement ER-A au point distant, ce qui permet de configurer chaque dispositif émetteur-récepteur en fonction du site d'implantation de celui-ci.

Au circuit logique d'état 3 sont délivrés les signaux ci-après :

- un signal, noté HOK, à partir du signal d'horloge S et d'un mono-stable redéclenchable, 30, jouant le rôle d'une fonction chien de garde,
- un signal TDOK, délivré à partir du signal EGAL délivré par le circuit récepteur précédemment décrit dans la description par l'intermédiaire d'un mono-stable redéclenchable, 31,
- un signal CONF délivré à partir du signal CONFIRM délivré par le circuit récepteur 2 par l'intermédiaire d'un compteur par 4, 32,
- un signal RESKO délivré à partir du signal de réception en entrée sur le récepteur, c'est-à-dire le signal numérique transcodé sur la ligne R flèche entrante, par l'intermédiaire d'un détecteur de 64 bits consécutifs à la valeur 1, référencé 33, et enfin,
- un signal ABKO délivré à partir de la ligne de transmission délivrant le signal numérique d'origine, ligne T flèche entrante, par l'intermédiaire d'un détecteur de 64 bits consécutifs à la valeur 1, référencé 34.

En outre, ainsi qu'on l'a représenté sur la figure 6, le circuit logique d'état 3 comprend des modules logiques câblés, notés 3A, 3B, 3C, 3D, 3E, 3F, 3G, 3H, ces circuits logiques câblés étant constitués par des logiques câblées comprenant des opérateurs logiques de type OU et par des modules logiques de type ET et NON.

Chaque module logique câblé vérifie dans cet exemple les relations ci-après :

$$3A : (E_2.CONF.TDOK.HOK) + \overline{HOK} + \overline{TDOK} + (\overline{E_1}.\overline{E_2}.CONF.TDOK.HOK)$$
$$3B : \overline{TDOK} + \overline{HOK} + RESKO + (TDOK.HOK.\overline{RESKO}.CONF.E5)$$
$$3C : E_1.CONF.TDOK.HOK$$
$$3D : TDOK.HOK.\overline{RESKO}.CONF.(E_2+E_3+E_5)$$
$$3E : ABKO.HOK.E_1.CONF.TDOK$$
$$3F : HOK.TDOK.E_2.CONF$$
$$3G : HOK.TDOK.E_1.CONF.\overline{ABKO}$$
$$3H : (CONF.\overline{E_1}.\overline{E_2}) + \overline{TDOK} + \overline{HOK}.$$

Dans les relations précédentes, le signe "+" indique l'opération logique OU et le signe "." l'opération logique ET.

Une description d'un mode opératoire d'un système de transmission de données auxiliaires constitué par un dispositif émetteur-récepteur ER-C et un dispositif émetteur-récepteur ER-A, placés en un point local et en un point distant, sera donnée dans le cas d'une application à la surveillance de l'intégrité de la liaison ci-après dans la description.

Le raccordement de la liaison est considéré à l'état normal lorsque :

- l'équipement abonné est sous tension, cet équipement n'émet pas de signal de repos, IDLE, l'ETTD abonné est connecté à l'ETCD abonné correspondant,
- le trafic reçu à l'interface, ETCD, commutateur ou centre est celui de l'abonné,
- aucun signal de repos n'est reçu à l'interface ETCD centre,
- le trafic reçu à l'interface ETCD abonné est celui du commutateur CM,
- les horloges émission et réception S sont reçues à l'interface de l'ETTD et à celle du commutateur.

Différents défauts de liaison peuvent être répertoriés :

- coupure dans le sens commutateur CM vers abonné,
- coupure dans le sens abonné vers commutateur CM,
- ETCD distant en boucle longue, le commutateur CM recevant un signal de repos,
- ETCD distant en boucle courte, par exemple dans le cas d'un bouclage dans le réseau numérique lui-même,
- absence de signal d'horloge au niveau du point local,
- absence d'horloge au niveau du point distant,
- émission par le point distant, c'est-à-dire l'abonné, d'un signal de repos,
- point distant, c'est-à-dire équipemnent abonné, hors tension ou déconnecté.

On rappelle qu'une boucle longue correspond à celle formée par bouclage sur une distance de ligne telle que la dégradation introduite par affaiblissement au signal le rend indiscernable du signal de repos. Un tel phénomène restant sans effet dans le cas d'une boucle courte.

Lorsque les dispositifs émetteurs-récepteurs objet de l'invention détectent des anomalies de fonctionnement, ceux-ci permettent de fournir des indications en agissant sur le signal d'indication I.

Dans le cas du dispositif émetteur-récepteur ER-C local, celui-ci fournit au commutateur CM un signal d'indication I.

A l'inverse, si le dispositif émetteur-récepteur distant, ER-A, détecte une anomalie de transmission dans le sens commutateur CM vers abonné, celui-ci fournit les informations en agissant également par l'intermédiaire du signal d'information d'état de la liaison ou signal d'indication I.

Une correspondance préférentielle non limitative, incident/état de la machine d'état ou circuit logique d'état 3, c'est-à-dire en fait de la valeur du signal d'indication I, pour les différents incidents précédemment mentionnés peut être établie.

Un exemple de fonctionnement sera donné dans le cas où chaque dispositif émetteur-récepteur ER-C, ER-A, fonctionne en mode 2, ainsi que précédemment décrit dans la description. Dans ce mode opératoire, le signal de repos émis par le commutateur CM ou par l'abonné est systématiquement transformé en fanions substitués, puis le dernier bit des fanions est transcodé pour transférer les messages d'informations auxiliaires d'une extrémité à l'autre et réciproquement.

Au niveau du circuit émetteur du dispositif émetteur-récepteur ER-C, en fonctionnement normal, le signal C représentatif de l'état fonctionnel du commutateur est à l'état fermé, c'est-à-dire par exemple à la valeur logique 0. Le circuit émetteur 1 du dispositif émetteur-récepteur ER-C émet par exemple un message M1 :

    1 0 0 1 1 1 1 1,

le bit de gauche étant émis en premier, ce message étant émis en permanence.

Sur changement d'état du signal C, correspondant à un changement d'état fonctionnel du commutateur CM, le circuit émetteur du dispositif émetteur-récepteur ER-C émet alors un autre message M2 :

    1 0 0 1 0 0 0 1,

le bit de gauche étant émis en premier.

Ainsi, la commande de sélection entre le message M1 et le message M2 est fonction de l'état fonctionnel du commutateur CM par l'intermédiaire du signal C. On indique que le choix des messages M1 et M2 est tel que 3 bits sont différents de l'un à l'autre, ce qui permet d'éviter les risques de confusion entre les messages précités.

Au niveau du circuit récepteur du dispositif émetteur-récepteur distant ER-A en fonctionnement normal, ce circuit récepteur doit normalement recevoir le message M1 en permanence.

Si tel est le cas et que les équipements de l'abonné sont dans un état satisfaisant, le dispositif émetteur-récepteur distant ER-A autorise le passage du trafic, positionne le signal d'indication I à la valeur 0, I fermé, et ne commande aucun bouclage du circuit de bouclage 4. Il commande par contre l'émission d'un message M3 :

    1 0 0 1 0 1 0 1,

le bit de gauche étant émis en premier sur le canal secondaire vers le dispositif émetteur-récepteur centre, ER-C.

Si le circuit récepteur du dispositif émetteur-récepteur distant, ER-A, reçoit au contraire le message M2 en permanence, alors, quel que soit l'état de l'équipement de l'abonné, ce circuit récepteur commande l'émission d'un signal de repos vers l'abonné, positionne le signal d'indication I à la valeur 1, I ouvert, et commande le bouclage des données reçues sur la sortie du circuit émetteur correspondant. Comme les données sont bouclées, le message renvoyé en ligne vers le circuit récepteur du dispositif émetteur-récepteur centre, ER-C, est donc le message M2.

Si le circuit récepteur du dispositif émetteur-récepteur distant ER-A ne reçoit pas de message relatif à des informations auxiliaires, ces messages étant discriminés par reconnaissance des quatre premiers bits de synchronisation toujours égaux à 1001, pendant une durée déterminée, la durée déterminée T0 précédemment décrite dans la description, le circuit récepteur peut alors en déduire, par interprétation correspondante, qu'il existe un défaut de transmission dans le sens commutateur CM-abonné. Cette détection est réalisée par le monostable 31 sur le signal EGAL, lequel délivre le signal TDOK au circuit logique d'état 3.

Lorsqu'aucun message n'est reçu avant l'échéance de la temporisation T0, la responsabilité de cette absence est imputée au réseau de transmission, et le message M4 est émis :

    1 0 0 1 1 1 0 1,

le bit de gauche étant émis en premier, et le signal I d'indication est positionné à l'état ouvert, I = 1, et un signal de repos est transmis à l'ETTD.

Dans le cas où un autre message que M1 ou M2 est reçu et confirmé, la responsabilité de ce manquement est imputée au réseau de transmission, le message M4 est émis, le signal de repos est envoyé à l'ETTD et le signal d'indication I est placé à la valeur 1, I ouvert.

A titre d'exemple non limitatif, on indique que la valeur de la temporisation T0 est déterminée par la longueur maximale de la trame transmise par l'abonné, soit :

-     une seconde pour 263 octets pour un débit à 2400 bits/seconde.

En ce qui concerne le circuit émetteur du dispositif émetteur-récepteur distant, ER-A, lorsque l'ETTD est hors tension ou déconnecté, cela correspond à des conditions de dérangement des circuits récepteurs. Il suffit donc de choisir un récepteur adapté à l'entrée du circuit émetteur 1 du dispositif émetteur-récepteur distant, pour que toutes les causes de dérangement abonné soient détectées de façon analogue, à savoir à l'état 1 permanent qui est également le cas lorsque l'abonné émet un signal de repos.

Ainsi que représenté sur la figure 6, cet état 1 est détecté par un compteur, 34, dont le signal de remise à 0, RESET, est câblé sur la sortie du récepteur d'interface de l'ETTD, c'est-à-dire en fait sur l'entrée T flèche entrante de l'émetteur 1, ce compteur étant échantillonné par le signal d'horloge S. Dès qu'un bit de données passe à 0, le compteur est réinitialisé et la condition n'est pas validée, le signal ABKO restant à la valeur 0.

La longueur minimum d'un signal de repos étant la succesion de 16 bits à la valeur 1, il est possible de prendre une valeur supérieure pour réaliser un filtrage sur événement. La responsabilité abonné n'est mise alors en évidence que lorsque la responsabilité réseau n'est pas active. Dans ce cas, le signal I d'indication est laissé à la valeur 0, I fermé, et le message M5 :

    1 0 0 1 0 1 1 1,

le bit de gauche étant émis en premier, est alors émis.

En ce qui concerne le circuit récepteur centre 2, en fonctionnement normal, ce circuit récepteur s'attend à recevoir le message M3 en permanence. Dans un tel cas, cela signifie que le dispositif émetteur-récepteur distant, ER-A, juge satisfaisant le trafic reçu du point local, CM, et, pour un état satisfaisant de l'équipement abonné, il autorise le passage du trafic et positionne le signal d'indication I à la valeur 0, I fermé.

Si le circuit récepteur 2 reçoit le message M2 en permanence, cela signifie que le dispositif émetteur-récepteur distant ER-A a reçu une demande de bouclage et a réalisé celle-ci. Il laisse alors le signal d'indication I à l'état fermé, I = 0, et laisse passer le trafic.

Si le circuit récepteur 2 reçoit le message M1, cela signifie que le réseau numérique est en boucle et que les données reçues sont celles émises par le commutateur CM. Le circuit récepteur positionne alors le signal d'indication I à ouvert, I = 1, et laisse passer le trafic. Si le circuit récepteur 2 reçoit le message M4, cela signifie que le dispositif émetteur-récepteur distant ER-A a détecté un défaut de réception. Dans ce cas, il laisse passer le trafic, mais positionne le signal d'indication I à ouvert, I = 1.

Si le circuit récepteur 2 reçoit le message M5, cela signifie que le réseau est dans un état correct, mais que l'équipement abonné est par exemple défectueux. Il positionne dans ce cas le signal d'indication I à l'état fermé, I = 0, le récepteur étant réputé recevoir le signal de repos.

Les différents cas précédemment mentionnés supposent bien entendu que l'on reçoive un motif identifiable. Cette condition n'est pas réalisée lorsque la réception est fortement perturbée, voire coupée, par exemple.

Si le récepteur ne reçoit pas de message sur le canal secondaire pendant une durée déterminée T1, la durée de temporisation précédemment décrite dans la description, alors il existe un défaut de transmission dans le sens abonné vers commutateur, CM. Cette détection est réalisée par le monostable 31, lequel reçoit le signal EGAL. Si aucun message n'est reçu avant l'échéance de la temporisation T1, la responsabilité est imputée au réseau et le signal d'indication I est positionné à l'état ouvert. Si un message autre que M1 à M5 est reçu, la responsabilité est également imputée au réseau et le signal I d'indicaton est placé à I ouvert, I = 1.

On indique que la valeur de la temporisation T1 peut être prise égale à celle de T0.

On note que si un signal de repos est détecté à l'entrée du circuit récepteur 2, il est transmis au commutateur CM par la ligne R flèche sortante. Le signal de repos est détecté par le compteur 33 échantillonné par le signal d'horloge S, et dont le fonctionnement est analogue au fonctionnement du compteur 34 précédemment décrit.

On indique en outre que, au niveau de chaque point local et distant, c'est-à-dire dans chaque dispositif émetteur-récepteur, ER-C, respectivement ER-A, un circuit monostable 30 est câblé sur le signal d'horloge S, ce circuit monostable 30, s'il n'est pas réinitialisé avant une temporisation T2, provoque le passage du signal d'indication I à I ouvert, I = 1. La valeur de la temporisation T2 précédemment mentionnée dans la description est déterminée par la période minimum de l'horloge, soit 300 bits/seconde, T2 pouvant être pris égal à 13,33 millisecondes pour cette valeur.

Outre le mode opératoire en mode 2 précédemment décrit dans la description, on indique que différentes utilisations du système de transmission d'informations auxiliaires, conformes à l'objet de la présente invention, peuvent être envisagées.

Parmi celles-ci, on indique que le système selon l'invention peut être utilisé comme indicateur de responsabilité de tout dérangement engendré sur la liaison numérique dans les conditions précédemment mentionnées dans la description.

Pour détecter l'origine des informations auxiliaires transmises, chaque dispositif émetteur-récepteur ER-C ou ER-A peut apposer une signature sur ces informations auxiliaires, le mode 2 étant, dans ce cas-là, de préférence utilisé.

En outre, on indique, selon un aspect particulièrement avantageux du système objet de la présente invention, que celui-ci peut permettre une mesure du taux d'erreur de transmission.

Comme les informations auxiliaires sont entrelacées dans le trafic de transmission des données HDLC, trafic de type X.25 tel que défini par le C.C.I.T.T. (Comité Consultatif International pour le Téléphone et le Télégraphe) par exemple, elles peuvent ainsi être utilisées pour évaluer le taux d'erreur sur les supports de transmission. Les données transmises selon le protocole X.25 ne pouvant pas être utilisées facilement pour mesurer un taux d'erreur de transmission, les données auxiliaires passant par le canal secondaire peuvent par contre être maîtrisées et utilisées dans un tel but.

On indique à titre d'exemple que, dans ce but, un message d'un octet comportant un motif de synchronisation sur 4 bits peut être émis en permanence, par l'équipement centre, c'est-à-dire par le dispositif ER-C.

Lorsque des perturbations se produisent en ligne, en l'absence de coupures toutefois, les bits des messages de 1 octet successivement émis sont susceptibles d'être altérés. Dans un tel cas, le message reçu est mauvais. Un micro-contrôleur associé au circuit émetteur 1 et au dispositif émetteur-récepteur ER-C, recevant par exemple le signal de synchronisation EGAL et l'horloge de cadencement ainsi que les octets du message transporté par les fanions transcodés permet de détecter l'erreur de transmission, si, par exemple, pour 8 fanions transcodés successifs reçus, le signal EGAL n'a pas été détecté, les fanions successifs ayant été perturbés et, par conséquent, le trafic également.

Le taux d'erreur est alors fonction du rapport du nombre de signaux EGAL au nombre de fanions reçus.

On indique que ce mode opératoire permet de distinguer les erreurs de sens de transmission du commutateur vers l'abonné et de l'abonné vers le commutateur.

Le système objet de la présente invention peut également être utilisé pour effectuer un transport d'alarme, en particulier lorsque le débit sur le canal secondaire est maximum, alors que le débit sur le canal primaire est minimum.

Dans le cas extrême, ainsi que déjà mentionné dans la description, pour un canal primaire non utilisé, le débit sur le canal secondaire est huit fois inférieur, soit 1 200 b/s pour une liaison à 9 600 b/s.

Dans un tel cas, on indique qu'un système conforme à l'objet de la présente invention comprenant un dispositif émetteur-récepteur ER-C et un dispositif émetteur-récepteur ER-A fonctionnant en mode 1 permet de transmettre des alarmes indépendantes les unes des autres vers un centre de supervision, par exemple.

Le port d'entrée sur le canal secondaire fonctionnant en mode 1 peut alors être utilisé pour recevoir des niveaux logiques ou des boucles de signalisation d'alarme à impédance infinie. Les signaux d'alarme correspondants sont transportés dans le canal secondaire jusqu'au commutateur, CM, par exemple. A cette extrémité, les informations auxiliaires sont alors transmises en paquet, et transmises via le réseau à l'utilisateur final, soit à l'état brut, soit après traitement par un système analogue à un système de supervision. On comprend ainsi que le signal d'alarme rudimentaire, c'est-à-dire non traité, peut ainsi parvenir à un centre d'exploitation du réseau par l'intermédiaire d'un port du circuit récepteur du dispositif ER-C correspondant.

Enfin, on indique que le système objet de la présente invention peut également être utilisé pour marquer les données numériques transmises selon le protocole HDLC pendant la transmission de ces données sur le canal primaire.

En effet, dans le cas où il est utile d'observer certaines données transmises dans le flot courant du canal primaire à partir d'un signal de mesure émis par un terminal par exemple, ce signal de mesure peut entraîner un codage élémentaire du canal secondaire, c'est-à-dire par un transcodage particulier, par exemple d'un ou plusieurs fanions d'origine en fanions de marquage, ces fanions de marquage pouvant être transcodés à une valeur déterminée. Toutes les données transmises sur le canal primaire peuvent alors être observées lorsque celles-ci sont entourées de fanions de marquage précités, les trames de données ne devant pas être observées pouvant alors être entourées de fanions d'origine non transcodés. La fin de l'observation peut être marquée par le retour des fanions marqués à la valeur des fanions d'origine.

On a ainsi décrit un procédé et un système de transmission d'informations auxiliaires particulièrement performant dans la mesure où ces derniers peuvent être utilisés dans des applications multiples. En particulier, on indique que les différents modes de fonctionnement, mode 0, mode 1, mode 2, précédemment décrits dans la description autorisent toute émulation en externe des fonctions des deux autres modes, au cas où un fonctionnement correspondant serait souhaité.

En outre, en ce qui concerne la réalisation pratique de chaque dispositif émetteur-récepteur, on indique que, d'une manière avantageuse, ceux-ci peuvent être réalisés sous forme de circuit intégré, auto-alimentés ou non à partir des installations ETCD, centre ou abonné, correspondantes.

## Revendications

1. Procédé de transmission d'informations auxiliaires sur une liaison bidirectionnelle de transmission de données numériques HDLC, formant canal primaire de transmission d'un signal numérique d'origine, entre un point local et un point distant, liaison sur laquelle au moins une succession de fanions est émise selon le protocole HDLC, les données numériques étant transmises entre deux ou plusieurs fanions d'origine successifs et un signal de repos ou une succession de fanions étant transmis sur ledit canal primaire en l'absence de transmission de données numériques, caractérisé en ce que ledit procédé consiste au moins, au point local et/ou distant, en vue de former un canal secondaire de transmission desdites informations auxiliaires,

   - à transcoder (a) l'un au moins des fanions d'origine à partir desdites informations auxiliaires à transmettre, pour engendrer au moins un fanion transcodé,
   - à transmettre (b) vers ledit point distant et/ou local sur ladite liaison, ledit fanion transcodé et lesdites données numériques, pour engendrer un signal numérique transcodé, et au point distant et/ou local,
   - à décoder (c) ledit fanion transcodé pour restituer et interpréter ladite information auxiliaire,
   - à transcoder en inverse (d) ledit fanion transcodé, pour reconstituer le fanion d'origine,
   - à transmettre (e) ledit fanion d'origine reconstitué et lesdites données numériques pour reconstituer ledit signal numérique d'origine vers une utilisation du point local ou distant, ce qui permet d'assurer, d'une part, la transmission des données numériques en transparence entre point local et point distant sur ledit canal primaire, et, d'autre part, la transmission et l'interprétation des informations auxiliaires entre le point local et le point distant, ou réciproquement, sur ledit canal secondaire.

2. Procédé selon la revendication 1, caractérisé en ce que le transcodage (a) de chaque fanion d'origine est effectué sur au moins un bit dudit fanion.

3. Procédé selon l'une des revendications 1 ou 2, caractérisé en ce que les opérations de transcodage (a) d'un fanion d'origine, de transmission (b) du fanion transcodé puis de décodage (c) et de transcodage inverse (d) du fanion transcodé sont effectuées sur une pluralité de fanions successifs, lesdits fanions successifs étant regroupés, sauf pendant leur transmission, en une séquence formée d'un nombre N déterminé de fanions successifs, ce qui permet d'effectuer le transcodage des fanions d'origine, à partir de l'information auxiliaire, sur des motifs (MOTIF) formés par des mots de N bits.

4. Procédé selon l'une des revendications précédentes, caractérisé en ce que celui-ci consiste, sur détection $(a_1)$ dudit signal de repos sur ladite liaison, à remplacer $(b_1)$ ledit signal de repos par une suite de fanions d'origine, préalablement à la formation dudit canal secondaire, ce qui permet d'augmenter le débit de l'information auxiliaire transmise sur ledit canal secondaire, par transcodage $(c_1)$ de tous les fanions d'origine.

5. Système de transmission d'informations auxiliaires sur une liaison bidirectionnelle de transmission de données numériques HDLC, formant canal primaire de transmission d'un signal numérique d'origine entre un point local (ER-C) et un point distant (ER-A), liaison sur laquelle au moins une succession de fanions d'origine est émise selon le protocole HDLC, les données numériques étant transmises entre deux ou plus fanions d'origine successifs et un signal de repos ou une succession de fanions étant transmis sur ledit canal primaire en l'absence de transmission de données numériques, caractérisé en ce que, en vue de former un canal secondaire de transmission des informations auxiliaires, ledit système comprend au niveau des points local (ER-C) et distant (ER-A)des moyens émetteurs-récepteurs (1,2) permettant, d'une part, de substituer à au moins un fanion d'origine un fanion transcodé à partir des informations auxiliaires, et, d'autre part, de substituer, audit au moins un fanion transcodé, un fanion d'origine reconstitué pour délivrer un signal numérique d'origine reconstitué vers une utilisation, lesdits moyens émetteurs-récepteurs (1,2) permettant en outre, au niveau du point local (ER-C) respectivement distant (ER-A), d'interpréter les informations auxiliaires transmises au moyen dudit au moins un fanion transcodé et d'engendrer au moins un message de réponse sur ledit canal secondaire par l'intermédiaire d'au moins un fanion transcodé.

6. Système de transmission selon la revendication 5, caractérisé en ce que lesdits moyens émetteurs-récepteurs (1,2) placés au point local (ER-C) et distant (ER-A) sont identiques.

7. Système selon la revendication 5, caractérisé en ce que lesdits moyens émetteurs-récepteurs comprennent au moins :

- des moyens (1) émetteurs de fanions transcodés, lesdits moyens émetteurs recevant ledit signal numérique d'origine, et délivrant, après transcodage, ledit signal numérique transcodé,
- des moyens (2) récepteurs de fanions transcodés, lesdits moyens récepteurs recevant ledit signal numérique transcodé et délivrant, suite à une opération de transcodage inverse des fanions transcodés, ledit signal numérique d'origine reconstitué,
- des moyens (DET IDLE) de détection et de discrimination dudit signal de repos, permettant d'engendrer un signal de commande de présence de signal de repos à l'entrée des moyens récepteurs (2) respectivement à la sortie des moyens émetteurs (1),
- des moyens logiques d'état (3) , commandés par ledit signal de commande de présence de signal de repos, lesdits moyens logiques d'état (3) permettant, suite à interprétation des informations auxiliaires reçues, de délivrer, d'une part, un signal d'information d'état de la liaison, et, d'autre part, de commander lesdits moyens émetteurs (1) et/ou moyens récepteurs (2) pour assurer le transcodage desdits fanions d'origine respectivement le transcodage inverse desdits fanions transcodés.

8. Système selon la revendication 7, caractérisé en ce que lesdits moyens émetteurs-récepteurs (1,2) comportent en outre, commandés par lesdits moyens logiques d'état (3), des moyens (4) de commande de bouclage entre l'entrée desdits moyens récepteurs (2) de fanions transcodés et la sortie desdits moyens émetteurs (1) de fanions transcodés.

9. Système selon la revendication 7, caractérisé en ce que lesdits moyens émetteurs-récepteurs (1,2) comportent en outre :

- des moyens de mémorisation de motifs, formés de mots de N bits,
- des moyens de lecture séquentielle desdits motifs mémorisés, lesdits moyens de lecture permettant une lecture séquentielle bit à bit de chaque mot constitutif d'un motif, cette lecture permettant d'engendrer un motif de transcodage d'au moins un bit correspondant d'un fanion d'origine, pour engendrer un fanion transcodé.

10. Système selon la revendication 7, caractérisé en ce que lesdits moyens émetteurs de fanions transcodés comportent au moins :

- une bascule d'entrée (100) recevant ledit signal numérique d'origine et délivrant en sortie $Q_0$ un bit de valeur déterminée,
- une porte logique ET (101) recevant la sortie $Q_0$ de la bascule d'entrée (100),
- un registre à décalage (102) à sept cellules à entrée série connectée en sortie de la porte logique ET (101) et à sorties parallèles et délivrant en sortie des cellules $Q_1$ à $Q_7$ des bits décalés du signal numérique d'origine,
- un circuit de type OU exclusif (110) dont les deux entrées sont connectées à la sortie de la porte logique ET (101) respectivement à la sortie $Q_0$ de la bascule d'entrée (100), et une bascule (111) connectée en sortie du circuit, de type OU exclusif (110) et délivrant en sortie $Q_9$ un bit de valeur déterminée,
- un premier (105) et un deuxième (106) détecteur logique de type NON-ET dont les entrées sont connectées aux sorties $Q_0$ et $Q_6$ respectivement $Q_0$ à $Q_7$ et $Q_9$ et dont la sortie est connectée en entrée de la porte logique ET (101), le premier détecteur (105) formant le dernier zéro d'un fanion d'origine introduit en lieu et place du signal de repos et le deuxième détecteur (106) formant le premier bit à la valeur zéro du fanion suivant,
- un circuit émetteur de fanions transcodés connecté en sortie de la porte logique ET (101) et comportant en cascade un compteur par huit (107a) et un troisième détecteur de fanions (107), formé par un circuit logique de type ET recevant en entrée la sortie complémentée $D_1$ de la porte ET et les sorties $Q_1$ à $Q_6$ et la sortie complémentée $Q_7$ des cellules du registre à décalage (102) et délivrant un signal de commande de transcodage de fanion, et une porte ET de transcodage (108) recevant sur une première entrée le signal de commande de transcodage et sur une deuxième entrée un message de transcodage (MSGE) correspondant à une suite de bits représentatifs des informations auxiliaires, et délivrant un bit correspondant,

- une porte logique OU (103) et une bascule de sortie (104) connectées en cascade, la porte OU (103) recevant sur une première entrée le signal délivré par la porte ET (101) et sur une deuxième entrée le bit délivré par la porte ET de transcodage (108), ladite bascule de sortie (104) délivrant le signal numérique transcodé formé par les données proprement dites et par les fanions transcodés.

**11.** Système selon la revendication 7 ou 10, caractérisé en ce que lesdits moyens (2) récepteurs de fanions transcodés comportent au moins :

- une bascule d'entrée (200) recevant ledit signal numérique transcodé et délivrant en sa sortie $Q_1$ un bit correspondant de valeur déterminée,
- un registre à décalage (201) à sept cellules à entrée série recevant le bit délivré par la sortie $Q_1$ de la bascule d'entrée (200) et à sorties parallèles des cellules $Q_2$ à $Q_8$, et délivrant des bits décalés du signal numérique transcodé,
- un premier circuit (205) détecteur de type NON-ET recevant en entrée les sorties $Q_1$ de la bascule d'entrée (200) et $Q_2$ à $Q_7$ et $Q_8$ complémentée du registre à décalage (201) et délivrant un bit de valeur zéro si les sorties $Q_1$ et $Q_7$ de la bascule (200) et des cellules du registre à décalage (201) ont la valeur 1 et si la sortie $Q_8$ de la dernière cellule du registre à décalage (201) a la valeur zéro,
- une porte ET (202) recevant sur une première entrée le bit délivré par la sortie $Q_1$ de la bascule d'entrée (200) et sur une deuxième entrée le bit délivré par la sortie du premier circuit détecteur (205), la sortie de la porte ET (202) délivrant un bit de valeur forcée à zéro par la valeur du bit délivré par le premier circuit détecteur,
- une porte OU (203) connectée à une bascule de sortie (204) dont une première entrée reçoit le bit délivré par la porte ET (202) et dont la sortie est reliée à une bascule de sortie, ce qui permet de transformer les fanions transcodés à l'aide des informations auxiliaires en fanions d'origine reconstitués,
- un deuxième circuit (206) détecteur de type ET recevant sur une entrée les sorties $Q_2$ à $Q_7$ et $Q_8$ complémentée du registre à décalage et délivrant un bit de valeur 1 si les sorties $Q_2$ à $Q_7$ de la dernière cellule du registre à décalage (201) a la valeur zéro,
- une bascule de synchronisation auxiliaire (207) recevant en entrée le bit délivré par le deuxième circuit détecteur (206) et délivrant à partir d'un signal d'horloge S, un signal (CLKR) synchronisé sur les fronts descendants, les informations auxiliaires (MSGS) véhiculées par le canal secondaire étant obtenues sous forme d'une succession de bits délivrés par la sortie $Q_1$ de la bascule d'entrée (200) lorsque le signal (CLKR) synchronisé passe à la valeur zéro.

**12.** Système de transmission d'informations auxiliaires selon la revendication 7, caractérisé en ce que, dans le but de déterminer la responsabilité d'un dérangement ou incident de transmission intervenant sur la liaison assurant le support de cette transmission, lesdits moyens logiques d'état sont constitués par une machine d'état (3) permettant d'établir une correspondance incident / état de cette machine d'état (3) à partir de messages ($M_1$ à $M_5$) émis par chaque émetteur-récepteur et dont la valeur correspond aux différents incidents de transmission, chaque émetteur-récepteur permettant d'affecter un code sur le signal auxiliaire afin de signaler le fonctionnement ou l'absence de fonctionnement des éléments connectés sur cette liaison, l'absence de réception par la machine d'état (3) d'un message de l'un des signaux émis par les émetteurs-récepteurs étant utilisée comme donnée d'entrée de la machine d'état.

**13.** Système de transmission d'informations auxiliaires selon la revendication 7, caractérisé en ce que, dans le but d'effectuer une évaluation du taux d'erreur de transmission de données transmises sur le canal primaire de transmission, en présence d'un message (EGAL) comportant un motif de synchronisation émis en permanence par un équipement centre, celui-ci comporte au niveau du circuit récepteur (2) d'un émetteur-récepteur (ER-C) un microcontrôleur permettant de déterminer ce taux d'erreur fonction du rapport du nombre de messages de synchronisation (EGAL) au nombre de fanions reçus.

**14.** Système de transmission d'informations auxiliaires selon la revendication 7, caractérisé en ce que, dans le but de réaliser un marquage et une surveillance des données transmises sur le canal primaire de transmission, celui-ci comporte des moyens arrangés tel que un ou plusieurs fanions d'origine sont transcodés à une valeur déterminée en fanions de marquage, les trames de données devant être observées étant entourées de fanions de marquage et les trames de données ne devant pas être observées étant entourées de fanions d'origine.

**Patentansprüche**

1. Verfahren zur Übertragung von Zusatzinformationen über eine bidirektionale Verbindung für die HDLC-Übertragung von digitalen Daten mit einem ersten Übertragungskanal für ein digitales Ursprungssignal zwischen einer lokalen Stelle und einer entfernten Stelle, eine Verbindung, über welche wenigstens eine Folge von Flags entsprechend dem HDLC-Protokoll gesendet wird, wobei die digitalen Daten zwischen zwei oder mehreren aufeinanderfolgenden Ursprungsflags übertragen werden und bei nicht vorhandener Übertragung von digitalen Daten ein Unterbrechungssignal oder eine Folge von Flags über den ersten Kanal übertragen werden, dadurch gekennzeichnet, daß das Verfahren an der lokalen und/oder entfernten Stelle im Hinblick auf die Bildung eines zweiten Übertragungskanals für die Zusatzinformationen wenigstens darin besteht,

   - wenigstens eine der Ursprungsflags ausgehend von den zu übertragenden Zusatzinformationen zu transkodieren (a), um wenigstens einen transkodierten Flag zu erzeugen,,
   - an die entfernte und/oder lokale Stelle über die Verbindung den transkodierten Flag und die digitalen Daten zu übertragen (b), um ein transkodiertes digitales Signal zu erzeugen, und an der entfernten und/oder lokalen Stelle
   - den transkodierten Flag zu dekodieren (c), um die Zusatzinformation wieder herzustellen und zu interpretieren,
   - den transkodierten Flag umgekehrt zu transkodieren, um den Ursprungsflag wieder herzustellen,
   - den wieder hergestellten Ursprungsflag und die digitalen Daten zum Wiederherstellen des digitalen Ursprungssignals zu einer Anwendung der lokalen oder entfernten Stelle zu übertragen (e) was einerseits gestattet, die Übertragung von digitalen Daten unter Durchlassung zwischen der lokalen Stelle und der entfernten Stelle über den ersten Kanal und andererseits die Übertragung und die Interpretation der Zusatzinformationen zwischen der lokalen Stelle und der entfernten Stelle, oder umgekehrt, über den zweiten Kanal sicherzustellen.

2. Verfahren nach Anspruch 1, dadurch gekennzeichnet, daß die Transkodierung (a) jedes Ursprungsflags über wenigstens ein Bit des Flags bewirkt wird.

3. Verfahren nach einem der Ansprüche 1 oder 2, dadurch gekennzeichnet, daß die Operationen der Transkodierung (a) eines Ursprungsflags, der Übertragung (b) des transkodierten Flags und dann der Dekodierung (c) und der inversen Transkodierung (d) des transkodierten Flags über eine Mehrzahl von aufeinanderfolgenden Flags bewirkt werden, wobei die aufeinanderfolgenden Flags mit Ausnahme während ihrer Übertragung in eine Sequenz umgruppiert werden, die als eine Sequenz einer bestimmten Zahl N aufeinanderfolgender Flags gebildet wird, wodurch erlaubt wird, die Transkodierung der Ursprungsflags ausgehend von der Zusatzinformation über die durch Worte von N-Bits gebildeten Worteinheiten (MOTIF) zu bewirken.

4. Verfahren nach einem der vorstehenden Ansprüche, dadurch gekennzeichnet, daß dieses darin besteht, über eine Erfassung ($a_1$) des Unterbrechungssignals auf der Leitung das Unterbrechungssignal durch eine Folge von Ursprungsflags zu ersetzen ($b_1$), vorzugsweise bei der Bildung des zweiten Kanals, wodurch erlaubt wird, den Durchsatz der auf dem zweiten Kanal übertragenen Zusatzinformation durch Transkodierung ($c_1$) aller Ursprungsflags zu erhöhen.

5. Übertragungssystem für Zusatzinformationen über eine bidirektionale Verbindung für die HDLC-Übertragung von digitalen Daten, die einen ersten Kanal zur Übertragung eines digitalen Ursprungssignals zwischen einer lokalen Stelle (ER-C) und einer entfernten Stelle (ER-A) bildet, einer Verbindung, auf welcher wenigstens eine Folge von Ursprungsflags gemäß dem HDLC-Protokoll gesendet wird, wobei die digitalen Daten zwischen zwei oder mehr aufeinanderfolgenden Ursprungsflags übertragen werden und ein Unterbrechungssignal oder eine Folge von Flags bei nicht vorhandener Übertragung von digitalen Daten über den ersten Kanal übertragen werden, dadurch gekennzeichnet, daß im Hinblick auf die Bildung eines zweiten Kanals zur Übertragung von Zusatzinformationen das System an den lokalen Stellen (ER-C) und den entfernten Stellen (ER-A) eine Sender/Empfängereinrichtung (1, 2) aufweist, die einerseits erlaubt ausgehend von den Zusatzinformationen wenigstens einen Ursprungsflag gegen einen transkodierten Flag auszutauschen und andererseits den wenigstens einen transkodierten Flag gegen einen rekonstituierten Ursprungsflag auszutauschen, um ein rekonstituiertes digitales Ursprungssignal zu einer Anwendung zu liefern, wobei die Sender-/Empfängereinrichtung (1, 2) ferner erlaubt, an der lokalen Stelle (ER-C) bzw. entfernten Stelle (ER-A) die mit Hilfe des wenigstens einen transkodierten Flags übertragenen Zusatzinformationen zu interpretieren und wenigstens eine Antwortmeldung auf dem zweiten Kanal mittels des wenigstens einen transkodierten Flag zu erzeugen.

**6.** Übertragungssystem nach Anspruch 5, dadurch gekennzeichnet, daß die an der lokalen Stelle (ER-) und entfernten Stelle (ER-A) angeordneten Sender-/Empfängereinrichtungen (1, 2) identisch sind.

**7.** System nach Anspruch 5, dadurch gekennzeichnet, daß die Sender/Empfängereinrichtung wenigstens umfaßt:

- eine Sendereinheit (1) für transkodierte Flags, wobei die Sendereinheiten das digitale Usprungssignal empfangen und nach der Transkodierung das transkodierte digitale Signal liefern,
- eine Empfängereinheit (2) für transkodierte Flags, wobei die Empfängereinheit das transkodierte digitale Signal empfängt und im Anschluß an einen inversen Trartskodierungsvorgang an den transkodierten Flags das rekonstituierte digitale Ursprungssignal liefert,
- eine Erfassungs- und Diskriminierungseinheit (DET IDLE) für das Unterbrechungssignal, die erlaubt, ein Steuersignal für das Vorhandensein des Unterbrechungssignals am Eingang der Empfängereinheit (2) bzw. am Ausgang der Sendeeinheit (1) zu erzeugen,
- ein Logik-Zustand-Einrichtung (3), die durch das Steuersignal für das Vorhandensein des Unterbrechungssignals gesteuert wird, wobei die Logik-Zustand-Einrichtung (3) erlaubt, im Anschluß an die Interpretation der empfangenen Zusatzinformationen einerseits ein Informationssignal über den Zustand der Verbindung zu liefern und andererseits die Sendereinheit (1) und/oder die Empfängereinheit (2) zu steuern, um die Transkodierung der Ursprungsflags bzw. die inverse Transkodierung der transkodierten Flags sicherzustellen.

**8.** System nach Anspruch 7, dadurch gekennzeichnet, daß die Sender/Empfängereinrichtung (1, 2) ferner durch die Logik-Zustand-Einrichtung (3) gesteuerte Steuereinheit (4) zur Abstimmung zwischen dem Eingang der Empfängereinheit (2) für die transkodierten Flags und dem Ausgang der Sendereinheit (1) für die transkodierten Flags umfaßt.

**9.** System nach Anspruch 7, dadurch gekennzeichnet, daß die Sender/Empfängereinrichtung (1, 2) ferner umfaßt:

- eine Speichereinrichtung für Worteinheiten, die aus Worten von N-Bits gebildet werden,
- eine Einrichtung zum sequentiellen Lesen der gespeicherten Worteinheiten, wobei die Leseeinrichtung eine sequentielle, bitweise Lesung jedes konstitutiven Wortes einer Worteinheit erlaubt, wobei diese Lesung erlaubt, eine Transkodierungsworteinheit von wenigstens einem Bit entsprechend einem Ursprungsflag zu erzeugen, um einen transkodierten Flag zu erzeugen.

**10.** System nach Anspruch 7, dadurch gekennzeichnet, daß die Sendereinheit für transkodierte Flags wenigstens umfaßt:

- einen Eingangsschalter (100), der das digitale Ursprungssignal empfängt und am Ausgang $Q_0$ ein Bit mit bestimmtem Wert liefert,
- ein Logik- UND-Tor (101), das die Ausgabe $Q_0$ des Eingangsschalters (100) erhält,
- ein Schieberegister (102) mit sieben Zellen mit einem mit einem Reiheneingang der an den Ausgang des Logik-UND-Tors (101) angeschlossen ist und mit parallelen Ausgängen und das am Ausgang der Zellen $Q_1$ bis $Q_7$ die verschobenen Bits des digitalen Ursprungssignals liefert,
- eine ausschließliche ODER-Schaltung (110), deren zwei Eingänge mit dem Ausgang des Logik-UNDTors (101) bzw. mit dem Ausgang $Q_0$ des Eingangsschalters (100) verbunden sind, und einen Schalter (111), der am Ausgang der ausschließlichen ODER-Schaltung (110) angeschlossen ist und am Ausgang $Q_9$ ein Bit mit bestimmtem Wert liefert,
- einen ersten (105) und einen zweiten (106) logischen NEIN-UND-Detektor, deren Eingänge an die Ausgänge $Q_0$ und $Q_6$ bzw. $Q_0$ bis $Q_7$ und $Q_9$ angeschlossen sind und deren Ausgang an den Eingang des logischen UND-Tors (101) angeschlossen ist, wobei der ersten Detektor (105) die letzte Null einer an Ort und Stelle des Unterbrechungssignals eingesetzten Ursprungsflag bildet und der zweite Detektor (106) das erste Bit mit dem Wert Null des folgenden Flags bildet,
- eine Emitterschaltung für transkodierte Flags, die am Ausgang des logischen UND-Tors (101) angeschlossen ist und aufweist kaskadenförmig einen Zähler für acht Stellen (107a) und einen dritten Flagdetektor (107), der durch eine logische UND-Schaltung gebildet wird, die am Eingang die ergänzende Ausgabe $D_1$ des UND-Tors und die Ausgaben $Q_1$ bis $Q_6$ und die ergänzende Ausgabe $Q_7$ der Zellen des Schieberegisters (102) erhält und ein Steuersignal für die Transkodierung des Flags liefert, und ein LIND-Tor (108) für die Transkodierung, das auf einem ersten Eingang das Steuersignal für die Transkodierung und auf einem zweiten Eingang eine Transkodierungsmeldung (MSGE), die einer Folge von die Zusatzinformationen repräsentierender Bits entspricht, erhält und ein entsprechendes Bit liefert,

- ein logisches ODER-Tor (103) und einen Ausgangsschalter (104), die kaskadenförmig verbunden sind, wobei das ODER-Tor (103) auf einem ersten Eingang das durch das UND-Tor (101) gelieferte Signal und auf einem zweiten Eingang das durch das UND-Tor (108) für die Transkodierung gelieferte Bit erhält, wobei der Ausgangsschalter (104) das durch die eigentlichen Daten und durch die transkodierten Flags gebildete, transkodierte digitale Signal liefert.

11. System nach Anspruch 7 oder 10, dadurch gekennzeichnet, daß die Empfangseinheit (2) für die transkodierten Flags wenigstens umfaßt:

- einen Eingangsschalter (200), der das transkodierte digitale Signal empfängt und an seinem Ausgang $Q_1$ ein entsprechendes Bit von vorbestimmtem Wert liefert,
- ein Schieberegister (201) mit sieben Zellen mit Reiheneingang, der das durch den Ausgang $Q_1$ des Eingangsschalters (200) gelieferte Bit empfängt und mit parallelen Ausgängen der Zellen $Q_2$ bis $Q_8$, die die verschobenen Bits des transkodierten digitalen Signals liefern,
- eine erste NEIN-UND-Erfassungsschaltung (205), die am Eingang die Ausgaben $Q_1$ des Eingangsschalters (200) und $Q_2$ bis $Q_7$ und $Q_8$ ergänzend vom Schieberegister (201) erhält und ein Bit vom Wert Null liefert, wenn die Ausgaben $Q_1$ und $Q_7$ des Schalters (200) und der Zellen des Schieberegisters (201) den Wert 1 haben und wenn die Ausgabe $Q_8$ der letzten Zelle des Schieberegisters (201) den Wert Null hat,

  - ein UND-Tor (202), das auf einem ersten Eingang das durch den Ausgang $Q_1$ des Eingangsschalters (200) gelieferte Bit und auf einem zweiten Eingang das durch den Ausgang der ersten Erfassungsschaltung (205) gelieferte Bit erhält, wobei der Ausgang des UND-Tors (202) ein Bit liefert, das durch den Wert des durch die erste Erfassungsschaltung gelieferten Bits auf Null gesetzt ist,

  - ein ODER-Tor (203), das mit einem Ausgangsschalter (204) verbunden ist, dessen erster Eingang das durch das UND-Tor (202) gelieferte Bit erhält und dessen Ausgang mit einem Ausgangsschalter verbunden ist, was das Umformen der transkodierten Flags mit Hilfe der Zusatzinformationen in rekonstituierte Ursprungsflags gestattet,
  - eine zweite UND-Erfassungsschaltung (206), die auf einem ersten Eingang die Ausgaben $Q_2$ bis $Q_7$ und $Q_8$ zusätzlich vom Schieberegister erhält und ein Bit vom Wert 1 liefert, wenn die Ausgaben $Q_2$ bis $Q_7$ der letzten Zelle des Schieberegisters (201) den Wert Null haben,
  - einen zusätzlichen Synchronisationsschalter (207), der am Eingang das durch die zweite Erfassungsschaltung (206) gelieferte Bit erhält und ausgehend von einem Taktsignal S ein über die abfallenden Flanken synchronisiertes Signal (CLKR) liefert, wobei die Zusatzinformationen (MSGS), die durch den zweiten Kanal befördert werden, in Form einer Folge von durch den Ausgang $Q_1$ des Eingangsschalters (200) gelieferten Bits erhalten wird, wenn das synchronisierte Signal (CLKR) auf den Wert Null geht.

12. Übertragungssystem für Zusatzinformationen nach Anspruch 7, dadurch gekennzeichnet, daß mit dem Ziel, die Verantwortlichkeit für einen Fehler oder ein Ereignis bei der Übertragung festzustellen, der/das auf die Verbindung einwirkt, welche die Stützung dieser Übertragung sicherstellt, sind die Logik-Zustandseinrichtungen durch ein Zustandsgerät (3) gebildet, das erlaubt, eine Korrespondenz Ereignis/Zustand dieses Zustandsgerätes (3) ausgehend von Meldungen ($M_1$ bis $M_5$), die durch jeden Sender-Empfänger gesandt werden und deren Wert den verschiedenen Übertragungsereignissen entspricht, einzurichten, wobei jeder Sender/Empfänger erlaubt, ein Code auf das Zusatzsignal zu geben, um so die Funktionsweise oder nicht vorhandene Funktionsweise der über diese Verbindung verbundenen Elemente zu signalisieren, wobei das Nichtvorhandensein eines Empfangs einer Meldung eines der durch den Sender/Empfänger gesandten Signale durch das Zustandsgerät (3) als Eingangsdatum des Zustandsgerätes genutzt wird.

13. Übertragungssystem für Zusatzinformationen nach Anspruch 7, dadurch gekennzeichnet, daß mit dem Ziel, eine Bewertung der Fehlerhäufigkeit der Übertragung von auf dem ersten Übertragungskanal übertragenen Daten auszuführen, das Vorhandensein einer Meldung (EGAL) eine Synchronisations-Worteinheit umfaßt, die dauerhaft durch eine Zentraleinrichtung gesandt wird, welche an der Empfangsschaltung (2) eines Sender/Empfängers (ERC) einen Mikrosteuerbaustein umfaßt, der erlaubt, die Fehlerhäufigkeit in Abhängigkeit vom Verhältnis der Anzahl von Synchronisationsmeldungen (EGAL) zur Anzahl von empfangenen Flags zu bestimmen.

14. Übertragungssystem für Zusatzinformationen nach Anspruch 7, dadurch gekennzeichnet, daß mit dem Ziel, eine Kennzeichnung und eine Kontrolle der auf dem ersten Übertragungskanal übertragenen Daten zu verwirklichen, wobei dieses Mittel umfaßt, die derart angeordnet sind, daß ein oder mehrere Ursprungsflags auf einen bestimmten Wert für Kennzeichnungsflags transkodiert werden, wobei die zu beobachtenden Dateneinträge von den Kennzeichnungsflags umgeben werden und die nicht zu beobachtenden Dateneinträge von Ursprungsflags umgeben werden.

## Claims

1. Process for transmission of auxiliary data over a bi-directional connection for HDLC transmission of digital data, forming a primary channel for transmission of a digital start signal, between a local point and a remote point, over which connection at east one sequence of flags is emitted in accordance with HDLC protocol, the digital data being transmitted between two or more successive start flags and an idle signal or a sequence of flags being transmitted over the said primary channel in the absence of transmission of digital data, characterised by the fact that the said process consists at least, at the local and/or remote point, in order to form a secondary channel for transmission of the said auxiliary data,

   • of transcoding (a) at least one of the start flags from the said auxiliary data to be transmitted, to generate at least one transcoded flag,
   • of transmitting (b) to the said remote and/or local point over the said connection the said transcoded flag and the said digital data, to generate a transcoded digital signal, and at the remote and/or local point,
   • of decoding (c) the said transcoded flag to restore and interpret the said auxiliary data,
   • of reverse transcoding (d) the said transcoded flag, to recreate the start flag,
   • of transmitting (e) the said recreated start flag and the said digital data to recreate the said digital start signal to a local or remote usage point, which ensures, on the one hand, transparent transmission of the digital data between local point and remote point over the said primary channel, and, on the other, transmission and interpretation of the auxiliary data between the local point and the remote point, or vice versa, over the said secondary channel.

2. Process as described in claim 1, characterised by the fact that the transcoding (a) of each start flag is effected on at least one bit of the said flag.

3. Process as described in either of claims 1 or 2, characterised by the fact that the operations of tanscoding (a) of a start flag, of transmission (b) of the transcoded flag and then of decoding (c) and of reverse transcoding (d) of the transcoded flag are performed on a plurality of successive fags, the said successive flags being grouped, except during their transmission, in a sequence formed of a determined number N of successive flags, which allows transcoding of the start flags, from the auxiliary data, on patterns (MOTIF) formed of words of N bits.

4. Process as described in one of the preceding claims, characterised by the fact that it consists, on detection $(a_1)$ of the said idle signal over the said connection, of replacing $(b_1)$ the said idle signal with a sequence of start flags, prior to formation of the said secondary channel, which permits increase of the transmission rate of the auxiliary data transmitted over the said secondary channel, by transcoding $(c_1)$ of all the start flags.

5. System for transmission of auxiliary data over a bidirectional connection for HDLC transmission of digital data, forming a primary channel for transmission of a digital start signal between a local point (ER-C) and a remote point (ER-A), over which connection at least one sequence of start flags is emitted in accordance with HDLC protocol, the digital data being transmitted between two or more successive start flags and an idle signal or a sequence of flags being transmitted over the said primary channel in the absence of transmission of digital data, characterised by the fact that, in order to form a secondary channel for transmission of the auxiliary data, the said system comprises at the level of the iocal (ER-C) and remote (ER-A) points emitter-receiver means (1, 2) permitting, on the one hand, substitution of at least one start flag with a transcoded flag from the auxiliary data, and, on the other hand, substitution of the said at least one transcoded flag, with a re-created start flag to deliver a re-created digital start signal to a usage point, the said emitter-receiver means (1, 2) moreover permitting, at the level of the local (ER-C) and remote (ER-A) points respectively, interpretation of the auxiliary data transmitted by means of the said at least one transcoded flag and generation of at least one response message over the said secondary, channel by means of the at least one transcoded flag.

6. System for transmission as described in claim 5, characterised by the fact that the said emitter-receiver means (1, 2) placed at the local (ER-C) and remote (ER-A) points are identical.

7. System as described in claim 5, characterised by the fact that the said emitter-receiver means comprise at least:

- emitter means (1) for transcoded flags, the said emitter means receiving the said digital start signal and, after transcoding, delivering the said transcoded digital signal,
- receiver means (2) for transcoded flags, the said receiver means receiving the said transcoded digital signal and, following at operation of reverse transcoding of the transcoded flags, delivering the said re-created digital start signal,
- means (DET IDLE) for detection and discrimination of the said idle signal, permitting generation of a control signal for the presence of an idle signal at the input of the receiver means (2) and at the output of the emitter means (1) respectively,
- logical state means (3), controlled by the said control signal for the presence of an idle signal, the said logical state means (3) permitting, after interpretation of the auxiliary data received, on the one hand, delivery of a data signal of the state of the connection, and, on the other, control of the said emitter means (1) and/or receiver means (2) to transcode the said start flags and reverse transcode the said transcoded flags respectively.

8. System as described in claim 7, characterised by the fact that the said emitter-receiver means (1, 2) also include, controlled by the said logical state means (3), loop control means (4) between the input of the said receiver means (2) for transcoded flags and the output of the said emitter means (1) for transcoded flags.

9. System as described in claim 7, characterised by the fact that the said emitter-receiver means (1, 2) also include:

- means for memorisation of patterns, formed of words of N bits,
- means for sequential reading of the said memorised patterns, the said reading means permitting sequential bit by bit reading of each word making up a pattern, this reading permitting generation of a transcoding pattern of at least one corresponding bit of a start flag to generate a transcoded flag.

10. System as described in claim 7, characterised by the fact that the said emitter means for transcoded flags include at least:

- an input flip-flop (100) receiving the said digital start signal and delivering at its output $Q_0$ a bit of determined value,
- an AND logic gate (101) receiving the output $Q_0$ of the input flip-flop (100),
- a seven cell shift register (102) with serial input connected to the output of the AND logic gate (101) and parallel outputs and delivering at the output of the cells $Q_1$ to $Q_7$ shifted bits of the digital start signal,
- a circuit of NOR type (110) the two inputs of which are connected to the output of the AND logic gate (101) and to the output $Q_0$ of the input flip-flop (100) respectively, and a flip-flop (111) connected to the output of the circuit, of NOR type (110) and delivering at its output $Q_9$ a bit of determined value,
- a first (105) and a second (106) Logical detector of NAND type the inputs of which are connected to the outputs $Q_0$ and $Q_6$ and $Q_0$ to $Q_7$ and $G_9$ respectively and the output of which is connected to the input of the AND logic gate (101), the first detector (105) forming the last zero of a start flag introduced in place of the idle signal and the second detector (106) forming the first bit of zero value of the next flag,
- an emitter circuit of transcoded flags connected to the output of the AND logic gate (101), and including in cascade a divide by eight counter (107a) and a third flag detector (107), formed by a logic circuit of AND type receiving at its input the complemented output $D_1$ of the AND gate and the outputs $Q_1$ to $Q_6$ and the complemented output $Q_7$ of the cells of the shift register (102) and delivering a flag transcoding control signal, and a transcoding AND gate (108) receiving at a first input the transcoding control signal and at a second input a transcoding message (MSGE) corresponding to a sequence of bits representing the auxiliary data, and delivering a corresponding bit,
- an OR logic gate (103) and an output flip-flop (104) connected in cascade, the OR gate (103) receiving at a first input the signal delivered by the AND gate (101) and at a second input the bit delivered by the transcoding AND gate (108), the said output flip-flop (104) delivering the transcoded digital signal formed by the data proper and by the transcoded flags.

11. System as described in claim 7 or 10, characterised by the fact that the said transcoded flag receiver means (2) include at least:

- an input flip-flop (200) receiving the said transcoded digital signal and delivering at its output $Q_1$ a corresponding bit of determined value,
- a seven cell shift register (201) with serial input receiving the bit delivered by the output $Q_1$ of the input flip-flop (200) and having parallel outputs from the cells $Q_2$ to $Q_8$, and delivering shifted bits of the transcoded digital signal,
- a first detector circuit (205) of NAND type receiving at its input the outputs $Q_1$ of the input flip-flop (200) and $Q_2$ to $Q_7$ and complemented $Q_8$ of the shift register (201) and delivering a bit of value zero if the outputs $Q_1$ and $Q_7$ of the flip-flop (200) and of the shift register cells (201) have the value 1 and if the output $Q_8$ of the last cell of the shift register (201) has the value zero,
- an AND gate (202) receiving at a first input the bit delivered by the output $Q_1$ of the input flip-flop (200) and at a second input the bit delivered by the output of the first detector circuit (205), the output of the AND gate (202) delivering a bit of value forced to zero by the value of the bit delivered by the first detector circuit,
- an OR gate (203) connected to an output flip-flop (204) a first input of which receives the bit delivered by the AND gate (202) and the output of which is connected to an output flip-flop, which allows transformation of the transcoded flags by means of the auxiliary data into recreated start flags,
- a second detector circuit (206) of AND type receiving at an input the outputs $Q_2$ to $Q_7$ and complemented $Q_8$ of the shift register and delivering a bit of value 1 if the outputs $Q_2$ to $Q_7$ of the last cell of the shift register (201) have the value zero,
- an auxiliary synchronisation flip-flop (207) receiving as input the bit delivered by the second detector circuit (206) and delivering from a clock signal S, a signal (CLKR) synchronised with falling fronts, the auxiliary data (MSGS) conveyed by the secondary channel being obtained in the form of a sequence of bits delivered by the output $Q_1$ of the input flip-flop (200) when the synchronised signal (CLKR) passes to the value zero.

12. System for transmission of auxiliary data as described in claim 7, characterised by the fact that, in order to determine the cause of a transmission disturbance or incident occurring over the connection supporting this transmission, the said logic state means consist of a state machine (3) permitting establishment of an incident/state correspondence of this state machine (3) from messages ($M_1$ to $M_5$) emitted by each emitter-receiver and the value of which corresponds to the different transmission incidents, each emitter-receiver permitting a code to be assigned to the auxiliary signal in order to indicate the functioning or non-functioning of the elements connected over this connection, the absence of reception by the state machine (3) of a message from one of the signals emitted by the emitter-receivers being used as input data for the state machine.

13. System for transmission of auxiliary data as described in claim 7, characterised by the fact that, in order to evaluate the error rate of transmission of data transmitted over the primary transmission channel, in the presence of a message (EGAL) including a synchronisation pattern permanently emitted by a piece of central equipment, this includes at the level of the receiver circuit (2) of an emitter-receiver (ER-C) a microcontroller permitting determination of this error rate as a function of the ratio of the number of synchronisation messages (EGAL) to the number of flags received.

14. System for transmission of auxiliary data as described in claim 7, characterised by the fact that, in order to tag and monitor the data transmitted over the primary transmission channel, this includes means so arranged that one or more start flags are transcoded at a determined value into tagging flags, the data fields which have to be observed being surrounded by tagging flags and the data fields not having to be observed being surrounded by start flags.

LIAISON

FIG.1a.
(ART ANTÉRIEUR)

POINT LOCAL

POINT DISTANT

FANION

FANION

| 0 1 1 1 1 1 1 0 | DONNÉES | 0 1 1 1 1 1 1 0 |

SIGNAL NUMÉRIQUE

| 1 1 1 1 1 1 1 1 1 1 1 1 1 1 1 1 1 1 1 1 1 1 1 1 1 1 1 1 1 1 1 1 |

SIGNAL DE REPOS          FIG.1b(ART ANTÉRIEUR)

SENS DE TRANSMISSION DES BITS

PROTOCOLE HDLC
FANION D'ORIGINE

FANION D'ORIGINE

| 0 1 1 1 1 1 1 0 | DONNÉES | 0 1 1 1 1 1 1 0 |

SIGNAL NUMÉRIQUE D'ORIGINE

↓TC                                    ↓TC

| 1 1 1 1 1 1 1 0 |          | 0 1 1 1 1 1 1 0 |

a) TANSCODAGE DES FANIONS D'ORIGINE

| 1 1 1 1 1 1 1 0 | DONNÉES | 0 1 1 1 1 1 1 0 |

FANION TRANSCODÉ          FANION TRANSCODÉ

b) CRÉATION ET TRANSMISSION D'UN SIGNAL NUMÉRIQUE TRANSCODÉ

| 1 1 1 1 1 1 1 0 | DONNÉES | 0 1 1 1 1 1 1 0 |

↑                                    ↑
                                     0

c) DÉCODAGE ET INTERPRÉTATION

↓TCI                                  ↓TCI

| 0 1 1 1 1 1 1 0 |←FANION D'ORIGINE RECONSTITUÉ→| 0 1 1 1 1 1 1 0 |

d) TRANSCODAGE INVERSE

| 0 1 1 1 1 1 1 0 | DONNÉES | 0 1 1 1 1 1 1 0 |

e) TRANSMISSION DU SIGNAL NUMÉRIQUE D'ORIGINE RECONSTITUÉ

SENS DE TRANSMISSION DES BITS          FIG.2a.

BL$_0$    F$_0$

0 1 1 1 1 1 1 0

F$_1$

1 1 1 1 1 1 1 0

F$_2$

1 1 1 1 1 1 1 0

BL$_i$    F$_3$

N=8    0 1 1 1 1 1 1 0

F$_4$

1 1 1 1 1 1 1 0

F$_5$

0 1 1 1 1 1 1 0

F$_6$

1 1 1 1 1 1 1 0

F$_7$

1 1 1 1 1 1 1 0

BL$_7$

BL$_7$    BL$_i$    BL$_0$

1 1 0 1 0 1 1 0

MOTIF

## FIG.2b.

1 1 1 1 1 1 1 1 1 1 1 1 1 1 1 1 1 1 1 1 1 1 1 1 1 1 1 1 1 1 1 1 1 1 1 1 1 1 1 1

a$_1$) SIGNAL DE REPOS

0 1 1 1 1 1 0 0 1 1 1 1 1 0 0 1 1 1 1 1 0 0 1 1 1 1 1 0

TC      TC TC      TC TC      TC TC      TC

FANION     FANION     FANION     FANION
D'ORIGINE INTRODUIT D'ORIGINE INTRODUIT D'ORIGINE INTRODUIT D'ORIGINE INTRODUIT

b$_1$)SUITE DE FANIONS D'ORIGINE INTRODUITS

1 1 1 1 1 1 0 0 1 1 1 1 1 0 1 1 1 1 1 1 0 0 1 1 1 1 1 0

TC      TC      TC      TC

FANION TRANSCODÉ FANION TRANSCODÉ FANION TRANSCODÉ FANION TRANSCODÉ

c$_1$)TRANSCODAGE DES FANIONS D'ORIGINE INTRODUITS

## FIG.2c.

## FIG.3.

## FIG.4b.

FIG.4a.

FIG.5a.

FIG.5b.

FIG.6.